# EUROPÄISCHE PATENTANMELDUNG

(11) **EP 4 411 848 A1**
(43) Veröffentlichungstag der Anmeldung: **07.08.2024**
(21) Anmeldenummer: 23154815.7
(22) Anmeldetag: 03.02.2023
(51) Int. Cl.: H01M 4/04

(54) **KALANDER UND FÜGEVERFAHREN ZUR HERSTELLUNG EINER FOLIENFÖRMIGEN ELEKTRODE**

(71) Anmelder: Breyer GmbH Maschinenfabrik, 78224 Singen Hohentwiel (DE)
(72) Erfinder: GULDE, Jürgen, 88682 Salem (DE); STAUDENMAIER, Uwe, 78343 Gaienhofen (DE); BORMAN, Joachim, 78247 Hilzingen (DE); KRIEBS, Jörg, 88709 Meersburg (DE); KORSMEIER, Andre, 78464 Konstanz (DE)
(74) Vertreter: Patentanwälte und Rechtsanwalt Weiß, Arat & Partner mbB

(57) **Zusammenfassung**

Kalander zur Herstellung einer folienförmigen Elektrode (12), der Kalander umfassend zumindest drei Walzen (4, 5, 6, 7, 8), wobei die zumindest drei Walzen (4, 5, 6, 7, 8) innerhalb des Kalanders derart angeordnet sind, dass zumindest zwei Walzenspalte (1, 2, 3) gebildet werden können, wobei zumindest einem ersten Walzenspalt (1) eine Dosierkammer (9) derart zugeordnet ist, dass eine als Schüttgut vorliegende aktive Masse (13) über die Dosierkammer (9) in diesen ersten Walzenspalt (1) eingebracht werden kann, um dort in die Form einer Folie (10) verpresst zu werden, wobei ein zweiter Walzenspalt (2) eingerichtet ist, zumindest eine in zumindest einem ersten Walzenspalt (1) gebildete Folie (10) auf eine flachbandförmige Trägerstruktur (11) zu laminieren, um eine folienförmige Elektrode (12) zu erhalten.

## Beschreibung

### Technisches Gebiet

Die Erfindung betrifft einen Kalander und ein Fügeverfahren zur Herstellung einer folienförmigen Elektrode gemäss den unabhängigen Ansprüchen.

### Stand der Technik

Kalander und Fügeverfahren sind bekannt.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Ansprüche. Vorteilhafte Ausgestaltungen sind in den abhängigen Ansprüchen beschrieben.

Ein Kalander gemäss der vorliegenden Erfindung dient der Herstellung folienförmigen Elektroden. Solche Elektroden können beispielsweise als Anode oder Kathode einer Zelle, beispielsweise einer Batterie, eingesetzt werden. Kalander gemäss der vorliegenden Erfindung können beispielsweise genutzt werden, um folienförmige Elektroden für die Batterien von Elektrofahrzeugen herzustellen.

Wird im Rahmen der vorliegenden Erfindung von einer "Batterie" gesprochen, so sind sowohl Primärbatterien als auch insbesondere Sekundärbatterien, also wieder aufladbare Akkumulatoren, umfasst.

Die erfindungsgemässen Kalander können beispielsweise in Trockenbeschichtungsverfahren eingesetzt, welche nachstehend noch näher beschrieben sind.

Ein solcher Kalander umfasst zumindest drei Walzen, welche innerhalb des Kalanders derart angeordnet sind, dass zumindest zwei Walzenspalte gebildet werden können.

Ein solcher Kalander kann auch zumindest vier Walzen umfassen, welche innerhalb des Kalanders derart angeordnet sind, dass zumindest drei Walzenspalte gebildet werden können.

Unter einem Walzenspalt wird hierbei ein zwischen zwei Walzen gebildeter linienförmiger und in der Regel parallel zu den Walzen-Achsen verlaufender länglicher Spalt mit sehr geringer Breite im Bereich von maximal wenigen Millimetern, bevorzugt von weniger als einem Millimeter, und noch bevorzugter von weniger als 500 Mikrometern verstanden. Beispielsweise kann daran gedacht sein, dass der Walzenspalt eine Breite von mindestens 30 Mikrometern und maximal 400 Mikrometern, vorzugsweise maximal 300 Mikrometern und noch bevorzugter maximal 200 Mikrometern aufweist.

Kann der Abstand zweier Walzen zueinander verändert werden, so entsteht der Walzenspalt zwischen diesen Walzen erst, wenn sie sich ausreichend einander angenähert haben. Von einem Walzenspalt kann auch dann die Rede sein, wenn die Walzen derart voneinander beabstandet sind, dass eine durch den Walzenspalt hindurchtransportierte Folie von den Walzen mit einer Kraft beaufschlagt wird.

Einem ersten Walzenspalt des vorgenannten Kalanders ist eine Dosierkammer derart zugeordnet, dass eine als Schüttgut vorliegende aktive Masse, auch als Batterie-Masse bezeichnet, über die Dosierkammer in diesen ersten Walzenspalt eingebracht werden kann, um dort in die Form einer Folie verpresst zu werden.

Gemäss der vorliegenden Erfindung, insbesondere gemäss dem weiter unten beschriebenen Verfahren, ist es vorzugsweise nicht vorgesehen, dass die als Schüttgut vorliegende aktive Masse ohne Verpressen oder anderweitiges Formen dieser Masse zur Folie auf eine nachstehend näher beschriebene flachbandförmige Trägerstruktur aufgebracht wird. Die Herstellung der Folie aus der aktiven Masse und das Aufbringen dieser Folie auf die Trägerstruktur mit anschliessendem Fügen, beispielsweise durch Laminieren im nachfolgend erläuterten zweiten Walzenspalt, sind somit vorzugsweise zwei separate Schritte.

Der vorgenannte erste Walzenspalt kann auch als Filmbilder-Walzenspalt bezeichnet werden, und gemeinsam mit der Dosierkammer Bestandteil einer Filmbildner-Einheit sein. Im Rahmen der vorliegenden Erfindung ist der "erste" Walzenspalt in der Regel der Filmbildner-Walzenspalt.

Ein zweiter Walzenspalt ist vorzugsweise eingerichtet, zumindest eine in zumindest einem ersten Walzenspalt gebildete Folie mit einer vorstehend bereits erwähnten flachbandförmigen Trägerstruktur durch Fügen, beispielsweise durch Laminieren, zu verbinden, um eine folienförmige Elektrode zu erhalten. Wird im Rahmen der vorliegenden Erfindung verkürzt von einer "Trägerstruktur" gesprochen, so ist stets die "flachbandförmige Trägerstruktur" gemeint.

Diese Trägerstruktur kann beispielsweise eine Trägerfolie sein. Alternativ kann die Trägerstruktur als flachbandförmiges Netz, im Allgemeinen als flachbandförmige Trägerstruktur mit Perforierungen, Ausnehmungen oder dergleichen ausgebildet sein. Ein solches Netz oder eine solche Trägerstruktur mit beispielsweise Perforierungen oder Ausnehmungen kann ebenso wie eine Trägerfolie als Ableiter wirken, was nachstehend noch näher erklärt wird. Wird ein Netz oder eine beispielsweise mit Perforierungen oder Ausnehmungen versehene Trägerstruktur jedoch beidseitig mit der aus der aktiven Masse gebildeten Folie verbunden, was nachstehend ebenfalls näher erläutert ist, so kann eine solche Trägerstruktur im Gegensatz zur Trägerfolie von der aktiven Masse durchdrungen werden. Dies kann einerseits dahingehend vorteilhaft sein, dass die von beiden Seiten auf die Trägerstruktur aufgebrachten Folien durch beispielsweise die Ausnehmungen oder Perforierungen hindurch miteinander in Kontakt stehen können, falls der im zweiten Walzenspalt aufgebracht Druck ausreicht, um die Folien in diese Perforierungen oder Ausnehmungen zumindest teilweise einzupressen. Andererseits kann ein Eindringen in die Perforierungen, Ausnehmungen oder dergleichen hinsichtlich des Elektronenflusses, welcher bei der Verwendung beispielsweise als Batterie im Elektro-Auto stattfindet, vorteilhaft sein. Ein solches Eindringen kann zusätzlich oder alternativ eine Haftung zwischen der Trägerstruktur und den Folien verbessern. Weiter weist eine mit Perforierungen oder Ausnehmungen versehen Trägerstruktur im Vergleich zu einer Trägerfolie mit gleicher Dicke und aus demselben Material eine geringere Masse auf, was ebenfalls vorteilhaft sein kann.

Eine Verstellung und Einstellung sämtlicher Walzenspalte gemäss der vorliegenden Erfindung kann beispielsweise elektrisch, hydraulisch oder pneumatisch erfolgen. Vorzugsweise können sämtliche oder zumindest einige Walzenspalte verstellt werden.

Die Verstellung der Walzenspalte kann geregelt sein, wobei an eine Druck- und/oder Positions-Regelung gedacht sein kann. Alternativ kann auch daran gedacht sein, dass die Verstellung der Walzenspalte durch eine Steuerung erfolgt.

Es kann auch daran gedacht sein, dass die Verstellung der Walzenspalte weder geregelt noch gesteuert erfolgt. Beispielsweise können mechanisch verstellbare Elemente vorgesehen sein, welche als Anschlag dienen. Zur Verstellung eines Walzenspalts kann dann beispielsweise zumindest eine der den Spalt bildenden Walzen bis zum Erreichen dieses Anschlags auf die andere zu bewegt werden. Die Position des als Anschlag dienenden Elements bestimmt in diesem Beispiel über die Breite des Walzenspalts. Weitere Alternativen für die Verstellung der Walzenspalte sind denkbar.

Die Spaltkräfte können einstellbar sein. Zylinder oder dergleichen, welche mit den Walzen in Verbindung stehen, können die Spaltkräfte bereitstellen. Derartige Zylinder, beispielsweise Hydraulik- oder Pneumatik-Zylinder, können sowohl zur Bereitstellung der Spaltkräfte dienen als auch eine Führung etwaiger Walzen-Bewegungen ganz oder teilweise, d.h. allein oder in Zusammenwirkung mit anderen Bauteilen, bereitstellen.

Weiterhin kann insbesondere das Verhältnis der Umfangsgeschwindigkeiten der beiden Walzen, welche den ersten Walzenspalt bilden, eingestellt werden. Dieses Verhältnis kann beispielsweise zwischen 1,1:1 und 10:1 liegen. Es kann aber auch daran gedacht sein, dass sämtliche Walzen des Kalanders, oder zumindest sämtliche Walzen, welche von einer einzigen Folie durchlaufen werden, mit derselben oder im Wesentlichen derselben Umfangsgeschwindigkeit betrieben werden. Das Verhältnis der Umfangsgeschwindigkeiten der den ersten Walzenspalt bildenden Walzen kann auch beispielsweise zwischen 1,01:1 und 20:1 oder zwischen 1,05:1 und 15:1 liegen. Weiterhin kann an Verhältnisse zwischen 3:1 und 7:1 insbesondere zwischen 4:1 und 6:1 gedacht sein.

Die Umfangsgeschwindigkeiten derjenigen Walzen, welche den oder die zweiten sowie etwaige vorhandene dritte Walzenspalte bilden, können identisch und vorzugsweise synchronisiert sein. Üblicherweise werden etwaige Scherkräfte nur im ersten Walzenspalt benötigt und sollten in den anderen Walzenspalten vermieden werden. Auch, um einen gleichmässigen Transport der im ersten Walzenspalt gebildeten Folie zu gewährleisten, kann daran gedacht sein, dass die Umfangsgeschwindigkeiten der Walzen, welche sämtliche stromabwärts des ersten Walzenspalts liegenden Walzenspalte bilden, identisch sind.

Alternativ kann vorgesehen sein, dass die Geschwindigkeit der Walzen stromabwärts zunimmt. Jede stromabwärts liegende Walze kann schneller drehen als die unmittelbar stromaufwärts liegende Walze. Auf diese Weise wird die im ersten Walzenspalt gebildete Folie gestreckt. Dies kann einerseits die Dicke der Folie verringern, was gewünscht sein kann. Zusätzlich oder alternativ kann dies Verwerfungen oder Unregelmässigkeiten innerhalb der Folie glattziehen, was sich wiederum positiv auf den Fügeprozess im zweiten Walzenspalt auswirken kann.

Eine etwaige Verringerung der Foliendicke durch die vorbeschriebene Streckung kann bei der Einstellung des ersten Walzenspalts berücksichtigt werden. Sinkt die Dicke der Folie unter einen erforderlichen Mindest-Wert, so kann dies kompensiert werden, indem die Breite des ersten Walzenspalts vergrössert wird.

Vorzugsweise ist von zwei Walzenspalt-bildenden Walzen jeweils zumindest eine einstellbar im Kalander angeordnet, und somit in ihrer Position veränderbar. Auf diese Weise kann ein Einfädeln etwaiger Folien oder dergleichen in den Walzenspalt, ein Reinigen des Walzenspalts, und ein Anpassen des Walzenspalts an beispielsweise unterschiedlich dicke Folien erfolgen.

Die Trägerstruktur kann aus Metall bestehen oder Metall enthalten. Beispielsweise kann an eine Aluminium und/oder Kupfer enthaltende Trägerstruktur oder eine aus Aluminium oder Kupfer bestehende Trägerstruktur gedacht sein. Die Trägerstruktur kann auch aus einem anderen metallischen oder auch nicht-metallischen Material oder aus mehreren solcher Materialien, beispielsweise geschichtet, oder aus einem Gemisch solcher Materialien gefertigt sein.

Soll die Trägerstruktur als Ableiter dienen, so ist zumindest eines der sie bildenden Materialien vorzugsweise gut leitend und vorzugsweise in ähnlichem Masse inert und robust wie beispielsweise Kupfer oder Aluminium.

Handelt es sich bei der Trägerstruktur um eine Trägerfolie, so kann an eine aus Metall, beispielsweise Aluminium und/oder Kupfer, bestehende, oder an eine Metall, beispielsweise Aluminium und/oder Kupfer, enthaltende Trägerfolie gedacht sein.

Soll die Trägerstruktur als Separator dienen, so ist zumindest eines der sie bildenden Materialien vorzugsweise nichtleitend für elektrischen Strom und beispielsweise durchlässig für zumindest bestimmte Ionen. Vorzugsweise gilt dies für die gesamte Trägerstruktur, falls diese als Separator dienen soll.

Die folienförmige Elektrode kann als Bestandteil einer Batterie eingesetzt werden.

Dient die Trägerstruktur der folienförmigen Elektrode als Ableiter, so werden in einer Batterie üblicherweise zwei derartige Elektroden eingesetzt, die durch einen nachträglich vorzusehenden Separator voneinander getrennt sind. Eine Batterie kann auch mehrere der vorgenannten Paare enthalten.

Dient die Trägerstruktur der folienförmigen Elektrode als Separator, so kann eine einzige solche folienförmige Elektrode bereits Anode und Kathode einer Batterie ausbilden. Im Rahmen der vorliegenden Erfindung wird das den zweiten Walzenspalt verlassende bandförmige Material auch dann als "folienförmige Elektrode" bezeichnet, wenn es, bedingt durch einen vorhandenen Separator, eigentlich zwei Elektroden umfasst. Umfasst die Trägerstruktur einen Separator oder besteht sie aus einem Separator, so können auf beide Folien der entsprechend hergestellten folienförmigen Elektrode Ableiter, beispielsweise Metallfolien, aufgebracht werden, welche üblicherweise in einer Batterie benötigt werden. Dies kann während des erfindungsgemässen Verfahrens oder anschliessend geschehen.

Eine "Batterie" bezeichnet hierbei dem üblichen Sprachgebrauch der Elektromobilität folgend vorzugsweise ein Sekundär-System, d.h. insbesondere einen mehrfach aufladbaren elektrochemischen Energiespeicher, dessen spezifische elektrochemische Reaktionen reversibel sind; dieser wird auch Akku(mulator) genannt.

Der Kalander kann genau zwei erste Walzenspalte umfassen, denen jeweils eine, vorzugsweise jeweils genau eine Dosierkammer zugeordnet ist.

Der Kalander kann zusätzlich, wie nachstehend näher beschrieben, zumindest einen dritten Walzenspalt, oft auch mehrere dritte Walzenspalte umfassen.

Der "zweite" Walzenspalt ist üblicherweise in Laufrichtung der Folie und/oder der Trägerstruktur nach dem "ersten" Walzenspalt, also stromabwärts des ersten Walzenspalts angeordnet. Dies gilt jedoch nicht für den zumindest einen "dritten" Walzenspalt. Der/die dritte/n Walzenspalt/e sind üblicherweise zwischen dem ersten und dem zweiten Walzenspalt angeordnet. Der zweite Walzenspalt kann in Laufrichtung gesehen der letzte Walzenspalt des Kalanders sein.

Der Kalander umfasst vorzugsweise genau einen zweiten Walzenspalt, um die Trägerstruktur einseitig oder, bevorzugt, beidseitig beispielsweise zu laminieren, indem die zuvor aus der aktiven Masse erzeugte Folie im zweiten Walzenspalt auf die Trägerstruktur aufgebracht, beispielsweise auflaminiert wird. Weist die Trägerstruktur Ausnehmungen, Perforationen oder dergleichen auf, so kann die aus der aktiven Masse erzeugte Folie im zweiten Walzenspalt zumindest teilweise in die Ausnehmungen, Perforationen oder dergleichen hineingepresst werden.

Der Kalander kann zwei, in manchen Ausführungsformen auch mehr als zwei zueinander bewegliche Abschnitte umfassen. Zumindest zwei dieser Abschnitte, vorzugsweise genau zwei Abschnitten sind hierbei jeweils zwei Walzen zugeordnet, welche jeweils einen ersten Walzenspalt bildend. Jeder Abschnitt umfasst dann einen ersten Walzenspalt.

Die Abschnitte können beispielsweise zueinander beweglich, insbesondere verfahrbar oder verschiebbar sein. Um die vorstehend beschriebene Relativbewegung der Abschnitte zueinander zu bewirken, ist zumindest einer der Abschnitte beweglich. Diese Bewegung kann entlang einer beliebigen, beispielsweise gekrümmten Bahnkurve verlaufen. Vorzugsweise verläuft die Bewegung jedoch linear. Insbesondere kann die Bewegung horizontal verlaufen. Alternativ kann an vertikale oder andersartig verlaufende lineare Bewegungen gedacht sein. Hierbei kann jeweils daran gedacht sein, dass nur einer der Abschnitte, beispielsweise genau eine von zwei Hälften des Kalanders, eine der vorbeschriebenen, vorzugsweise linearen Bewegungen durchführen kann.

Die Abschnitte können zwei, vorzugsweise gleich oder ähnlich grosse Hälften des Kalanders darstellen. Vorzugsweise enthält jede Hälfte zumindest zwei jeweils den ersten Walzenspalt bildenden Walzen. Sämtliche Walzen des Kalanders, insbesondere diejenigen, welche mit anderen Walzen Walzenspalte bilden können, können den Abschnitten zugeordnet oder in diesen angeordnet sein.

Der zweite Walzenspalt wird vorzugsweise von zwei Walzen gebildet, wobei eine der beiden Walzen dem ersten Abschnitt des Kalanders zugeordnet ist und die andere Walze dem zweiten Abschnitt des Kalanders zugeordnet ist. Die beiden Hälften, im Allgemeinen die beiden Abschnitte des Kalanders bilden den zweiten Walzenspalt also vorzugsweise gemeinsam, indem sie jeweils eine der den zweiten Walzenspalt bildenden Walzen beisteuern.

Eine Bewegung der Abschnitte, beispielsweise der Kalander-Hälften zueinander kann symmetrisch, insbesondere in Bezug auf eine weiter unten noch näher besprochenen Symmetrie-Achse ablaufen. Die vorstehend beschriebene Symmetrie ist jedoch kein zwingender Bestandteil der vorliegenden Erfindung.

Die den zweiten Walzenspalt bildenden Walzen können durch die Einrichtungen, welche eine Bewegung der Abschnitte, beispielsweise der Kalander-Hälften, oder zumindest die Bewegung eines der Kalander-Abschnitte auf den anderen Kalander-Abschnitt zu bewirken, mit einer Kraft beaufschlagt werden. Diese kann zusätzlich oder alternativ zu einer Kraft, welche ein Zylinder oder dergleichen, der mit den vorgenannten Walzen in Verbindung steht und deren Bewegung innerhalb der Kalander-Abschnitte erlaubt, für eine Kraftbeaufschlagung der Folien im zweiten Walzenspalt sorgen.

Sämtliche vorstehenden und nachstehenden Ausführungen gelten sowohl für Kalander, welche wie vorstehend beschrieben zwei oder mehr Abschnitte, insbesondere zwei Hälften aufweisen, als auch für anders gebaute Kalander. Insbesondere gelten sämtliche Ausführungen auch für einstückig gebaute Kalander.

Ein Kalander, welcher aus zwei Hälften gebildet wird, die zueinander beweglich angeordnet sind, kann auf einfache Weise gereinigt und gewartet werden, indem beide Hälften beispielsweise horizontal auseinandergefahren bzw. im Allgemeinen auseinanderbewegt werden, um einer Bedienperson Zugang zu den Walzen zu verschaffen. Sind die Kalander-Hälften horizontal zueinander beweglich, so können sie beispielsweise über eine Linearführung im Boden bewegt werden. Wie bereits beschrieben muss die Bewegung der beiden Hälften jedoch nicht zwingend horizontal verlaufen. Andere Bahnkurven sind denkbar, welche jeweils über geeignete Führungen oder dergleichen implementiert werden können.

Eine im wesentlichen symmetrische Anordnung insbesondere der Walzen, zumindest der meisten oder einiger Walzen, ermöglicht eine einfache Aufteilbarkeit des Kalanders in zwei zueinander bewegliche Hälften. Es kann hierbei genügen, wenn die den zweiten Walzenspalt bildenden Walzen symmetrisch zu einer senkrecht zwischen den Kalander-Hälften verlaufenden Symmetrie-Achse angeordnet sind.

Eine horizontale Beweglichkeit beider Hälften, beispielsweise über eine im Boden angeordnete Linearführung, kann hierbei einen besonders einfachen Aufbau erlauben. Hierbei liegt üblicherweise bei der Betrachtung eines Querschnitts des Kalanders eine Symmetrie-Achse vor, während bei einer Betrachtung des Kalanders im dreidimensionalen Raum eine zwischen den Kalander-Hälften verlaufende Symmetrie-Ebene vorliegen kann.

Der Kalander kann einen dritten Walzenspalt umfassen, welcher entweder eine zusätzliche Kompression der Folie vor dem Fügen im zweiten Walzenspalt, beispielsweise dem Laminieren, bewirkt, oder einer Übergabe der Folie dient. Eine Übergabe der Folie meint hierbei, dass die betreffende Folie, in der Regel die aus der aktiven Masse gebildete Folie, sich nach Durchlaufen des betreffenden Walzenspalts nicht mehr an diejenige Walze anschmiegt oder nicht mehr diejenige Walze umschlingt, wie vor dem Durchlaufen des Walzenspalts. Der dritte Walzenspalt kann auch eine andere Funktion erfüllen.

Allgemein kann folgendes festgestellt werden: Im Rahmen der vorliegenden Erfindung umfassen Kalander vorzugsweise zumindest einen ersten und einen zweiten Walzenspalt, um die Folie aus der aktiven Masse zu bilden und auf die Trägerstruktur zu laminieren oder Folie und Trägerstruktur anderweitig zu fügen. Etwaige weitere Walzenspalte werden vorzugsweise als "dritte" Walzenspalte bezeichnet.

Hierbei ist die Anzahl dritter Walzenspalte variabel. Muss beispielsweise eine zusätzliche Kompression besonders intensiv erfolgen, so können auch mehrere dritte Walzenspalte mit dieser Funktion hintereinandergeschaltet und somit hintereinander durchlaufen werden.

Der Kalander kann zwei oder mehr, vorzugsweise jedoch genau zwei Dosierkammern und zumindest sechs, einem Ausführungsbeispiel gemäss genau sechs Walzen umfassen. Diese zumindest sechs Walzen können bis zu zwei erste Walzenspalte, bis zu zwei dritte Walzenspalte und einen zweiten Walzenspalt bilden. Ein solcher Kalander kann eingerichtet sein, die Trägerstruktur ein- oder beidseitig durch Fügen mit der Folie zu versehen, um die folienförmige Elektrode zu erhalten. Mit dem Begriff "Folie" wird hierbei an dieser Stelle und auch an anderer Stelle innerhalb der vorliegenden Anmeldung vorzugsweise die aus der aktiven Masse gebildete Folie bezeichnet. Vorstehend wird davon gesprochen, dass "bis zu" zwei Walzenspalte gebildet werden können, weil abhängig von einer Fahrweise des Kalanders und der konkreten Positionierung beispielsweise der die ersten Walzenspalte bildenden Walzen je nach Abstand zwischen diesen Walzen ein oder zwei Walzenspalte gebildet werden können.

Im Allgemeinen kann daran gedacht sein, dass zwei Walzen des Kalanders, welche einander bis auf wenige Millimeter, vorzugsweise bis auf weniger als einen Millimeter, noch bevorzugter bis auf weniger als einige zig Mikrometer angenähert werden können, grundsätzlich geeignet sind, einen Walzenspalt zu bilden. In Abgrenzung dazu können Paare von Walzen existieren, zwischen denen bauart-bedingt ein solch geringer Abstand zur Bildung eines Walzenspalts nicht einstellbar ist. Unabhängig davon, ob der Walzenspalt durch entsprechende Einstellung des Abstands zwischen den betrachteten Walzen zu einem bestimmten Zeitpunkt vorliegt, oder nicht, können Paare von Walzen also stets dahingehend charakterisiert werden, ob zwischen ihnen ein Walzenspalt gebildet werden kann, oder nicht. Ob ein Walzen-Paar "spaltbildend" ist, ist dahingehend bauart-bedingt, als Walzen, welche durch entsprechende Lager und/oder Führungen oder dergleichen einander nicht ausreichend angenähert werden können, sowie Walzen-Paare, zwischen denen zumindest eine weitere Walze liegt, keinen Walzenspalt bilden können.

Als Lager und Führungen kommen sämtliche für Kalander-Walzen bekannte Lager und Führungen in Betracht. Die bereits erwähnten Zylinder oder dergleichen zum Bereitstellen der Spaltkräfte können ebenfalls vorhanden sein. Sie können auch, zumindest teilweise, als Führung wirken. Es kann daran gedacht sein, eine, mehrere oder sämtliche Walzen spielkompensiert zu lagern.

Ob die Folie ein- oder beidseitig auf die Trägerstruktur aufgebracht wird, kann von einer Folienführung innerhalb des Kalanders abhängen. Es kann auch daran gedacht sein, dass die Folienführung nicht bestimmt, ob die Trägerstruktur nur auf einer oder auf beiden Seiten mit der Folie versehen wird, aber entsprechend an ein durchzuführendes ein- oder beidseitiges Aufbringen der Folie angepasst wird. Es kann auch daran gedacht sein, dass ein Umschalten von einem einseitigen auf ein beidseitiges Aufbringen keine Änderung der Folienführung benötigt. Die "Folienführung" bezeichnet hierbei den Umstand, ob und welche Walzenspalte des Kalanders in welcher Reihenfolge von der Folie und/oder der Trägerstruktur durchlaufen werden. Einem weiteren Ausführungsbeispiel gemäss kann der Kalander zwei Dosierkammern und zumindest zehn Walzen umfassen, die bis zu zwei erste Walzenspalte, bis zu sechs dritte Walzenspalte und einen zweiten Walzenspalt bilden können. Der Kalander kann eingerichtet sein, auf einer oder beiden Seiten der Trägerstruktur jeweils eine Folie aufzubringen, die Trägerstruktur also ein- oder beidseitig mit der Folie zu versehen, um die folienförmige Elektrode zu erhalten. Die Trägerstruktur wird also entweder ein- oder beidseitig mit Folie(n) verbunden. Der Kalander kann genau zwei Dosierkammern umfassen. Der Kalander kann genau zehn Walzen umfassen.

Die Walzen, welche Walzenspalte bilden können, können symmetrisch zu einer senkrecht verlaufenden Symmetrie-Achse angeordnet sein. Diese symmetrische Anordnung kann insbesondere vorrangig oder ausschliesslich für diejenigen Walzen gelten, welche tatsächlich abhängig von ihrer Positionierung mit anderen Walzen entsprechende Walzenspalte bilden können. Etwaige andere Rollen, etwa Umlenk-Rollen oder Auf- und Abwickel-Rollen, sind nicht oder nicht zwingend symmetrisch zur vorgenannten Symmetrie-Achse angeordnet. Wie weiter oben bereits erwähnt kann jedoch auch angedacht sein, dass die Symmetrie lediglich für die den zweiten Walzenspalt bildenden Walzen gilt.

Die vorliegende Erfindung umfasst auch ein **System** umfassend zumindest einen Kalander.

Es kann daran gedacht sein, dass die Trägerstruktur in einem einzigen Kalander zu der folienförmigen Elektrode verarbeitet wird. Alternativ kann auch daran gedacht sein, dass die Trägerstruktur und/oder die folienförmige Elektrode mehrere hintereinander geschaltete Kalander durchläuft/durchlaufen, welche das o.g. System bilden. Beispielsweise kann in einem ersten Kalander die Folie aus der aktiven Masse erzeugt und in einem stromabwärts angeordneten zweiten Kalander die Folie(n) auf die Trägerstruktur aufgebracht werden. Alternativ kann beispielsweise ein in Laufrichtung der Trägerstruktur erster Kalander die Folie(n) auf die Trägerstruktur aufbringen, und ein stromabwärts angeordneter zweiter Kalander bewirkt lediglich eine zusätzliche Verdichtung der folienförmigen Elektrode, insbesondere der vorzugsweise auflaminierten, oder anderweitig aufgebrachten Folie, welche zuvor aus der aktiven Masse gefertigt wurde.

Weiter alternativ kann ein erster Kalander eine Folie bilden und diese auf genau eine Seite der Trägerstruktur aufbringen, die Folie also beispielsweise auf die Oberseite der Trägerstruktur aufbringen. Ein zweiter stromabwärts angeordneter Kalander kann eine weitere Folie bilden, welche er auf die Unterseite der zuvor einseitig mit einer Folie versehenen Trägerstruktur aufbringt.

Wird in einem ersten Kalander eine als Separator dienende Trägerstruktur beidseitig mit jeweils einer Folie versehen, so können in einem oder zwei nachgeschalteten Kalandern anschliessend Ableiter, beispielsweise jeweils eine Metallfolie, auf die nach aussen weisenden Folien der im ersten Kalander erzeugten folienförmigen Elektrode aufgebracht werden. Alternativ können solche als Ableiter wirkenden Metallfolien oder dergleichen auch in demselben Kalander aufgebracht werden, in dem diese beispielsweise in einen geeigneten dritten Walzenspalt derart zugeführt werden, dass sie in der den zweiten Walzenspalt verlassenden folienförmigen Elektrode beidseitig als äusserste Schicht der folienförmigen Elektrode vorhanden sind.

Die nachfolgend beschriebenen Ab- und Aufwickel-Rollen können Bestandteil eines Kalanders oder des Systems sein. Die vorgenannten Rollen können also innerhalb eines einzigen Kalanders angeordnet sein, welcher sämtliche Herstellungs-Schritte bewerkstelligt. Alternativ kann an ein System umfassend mehrere Kalander gedacht sein, welche auch als Kalander-Strasse bezeichnet werden könnte, wobei ein in Laufrichtung erster Kalander die Abwickel-Rolle umfasst und ein in Laufrichtung, d.h. stromabwärts, letzter Kalander des Systems die Aufwickel-Rolle umfasst. Weiter alternativ kann daran gedacht sein, dass die Ab- und/oder die Aufwickel-Rolle ausserhalb der Kalander angeordnet sind, aber dennoch einen Teil des Systems darstellen.

Das System kann neben den Kalandern sowie ggf. Ab- und/oder Aufwickel-Rollen weitere Bestandteile umfassen. Hierbei kann an Prüf-Einrichtungen gedacht sein, welche beispielsweise eine Dicke, Qualität, oder eine andere Eigenschaft der folienförmigen Elektrode und/oder der Trägerstruktur prüfen.

Weiterhin kann an Einrichtungen gedacht sein, welche vor dem Fügen und/oder danach weitere Bearbeitungsschritte an der Trägerstruktur und/oder der folienförmigen Elektrode durchführen. Hierbei können Bearbeitungsschritte angedacht sein, welche die Trägerstruktur und/oder die folienförmige Elektrode dauerhaft verändern, beispielsweise ein Zuschneiden, das Aufbringen einer Beschichtung nach dem Fügen, oder dergleichen. Zusätzlich oder alternativ kann an Bearbeitungsschritte gedacht sein, welche die folienförmige Elektrode nicht oder nur vorübergehend verändern, wie beispielsweise ein Erwärmen, ein Abkühlen, ein Reinigen, oder dergleichen.

Einer Walze, einigen Walzen oder allen Walzen kann ein Schaber zugeordnet sein, welcher im Betrieb laufend etwaige Verunreinigungen von der Walze entfernt.

Während ein solcher Schaber üblicherweise eine rein mechanische Reinigung vornimmt, kann zusätzlich oder alternativ an eine chemische Reinigung zumindest einer Walze, gegebenenfalls auch mehrerer oder aller Walzen im laufenden Betrieb gedacht sein: Hierfür kann eine Reinigungs-Einrichtung vorgesehen sein, welche beispielsweise mit einem auf Rollen gelagerten Endlosband ausgestattet ist, das im Betrieb an die Walzen herangeführt werden kann, um diese zu reinigen. Das Endlosband kann automatisch mit einem geeigneten Reinigungsmittel versehen, beispielsweise damit getränkt werden.

Wie vorstehend bereits angedeutet, kann der Kalander eine, vorzugsweise genau eine Abwickel-Rolle für die Trägerstruktur umfassen. Der Kalander kann eine, vorzugsweise genau eine Aufwickel-Rolle für die folienförmige Elektrode umfassen. Optional kann der Kalander eine oder mehrere Umlenk-Rollen für die Trägerstruktur und die folienförmige Elektrode umfassen. Im Falle eines Systems gelten die vorgenannten Überlegungen für das System, welches also genau eine Abwickel-Rolle und genau eine Aufwickel-Rolle umfassen kann.

Der Kalander kann eine Abwickel-Rolle und eine Aufwickel-Rolle für eine Anfahr-Folie umfassen. Vorzugsweise umfasst der Kalander zwei solcher Auf- und Abwickel-Rollen, wenn zwei Dosierkammern vorhanden sind, und eine solche Auf- und Abwickel-Rolle für die Anfahr-Folie, wenn eine Dosierkammer vorhanden ist. Der Kalander kann also, vorzugsweise abhängig von der Anzahl vorhandener Dosierkammern, genau eine oder genau zwei Aufwickel-Rollen und genau eine oder genau zwei Abwickel-Rollen für die Anfahr-Folie umfassen. Die Aufwickel-Rolle kann die Anfahr-Folie auch dann aufwickeln, wenn die aus der aktiven Masse gebildete Folie auf ihr aufliegt.

Die Ab- und Aufwickel-Rollen für die Anfahr-Folie können so angeordnet sein, dass die Anfahr-Folie durch den zweiten Walzenspalt verläuft, um dort vor einem Beginn des eigentlichen Fügeverfahrens, beispielsweise Trockenbeschichtungsverfahrens, einen von dem ersten Walzenspalt zu dem zweiten Walzenspalt verlaufenden Abschnitt der Folie bereitzustellen. Hierbei liegt dieser Abschnitt der Folie auf der Anfahr-Folie auf. Die Ab- und Aufwickel-Rollen können beispielsweise durch Anordnung entsprechender Umlenk-Rollen für die Anfahr-Folie eingerichtet sein, um den vorbeschriebenen Verlauf der Anfahr-Folie zu gewährleisten. Das vorgenannte "eigentliche Fügeverfahren" meint die Verbindung der Trägerstruktur mit der Folie, welche aus der aktiven Masse erzeugt wurde, durch Aufbringen der Folie im zweiten Walzenspalt.

Es kann daran gedacht sein, dass die Anfahr-Folie durch einige oder sämtliche Walzenspalte geführt wird, durch welche im eigentlichen Fügeverfahren die aus der aktiven Masse erzeugte Folie geführt werden soll, mit Ausnahme des ersten Walzenspalts, in welchem die Filmbildung erfolgt.

Durch Verwendung der Anfahr-Folie entfällt das ansonsten händisch durchzuführende, zeitraubende und fehleranfällige "Einfädeln" der im ersten Walzenspalt erzeugten Folie durch alle stromabwärts des ersten Walzenspalts liegenden Walzenspalte, welche die Folie im Betrieb passieren muss, um erfolgreich im zweiten Walzenspalt auf die Trägerstruktur aufgebracht zu werden. Die Arbeit des Einfädelns kann vorteilhafterweise die Anfahr-Folie übernehmen. Dies ist gegenüber einem manuellen Einfädeln schneller, billiger, einfacher, robuster, weniger fehleranfällig, und erhöht zusätzlich die ArbeitsSicherheit, da das manuelle Einfädeln ein Verletzungsrisiko darstellt. Die Anfahr-Folie muss zwar auch "eingefädelt" werden, allerdings ist sie speziell für diesen Zweck entworfen und beispielsweise aus einem entsprechend gut handhabbaren, beispielsweise dehnbaren und/oder reissfesten und/oder robusten und/oder griffigen Material gefertigt. Die aus der aktiven Masse hergestellte Folie ist hingegen bei der manuellen Handhabung oft riss-anfällig, was das Einfädeln zusätzlich erschwert. Die Anfahr-Folie kann die vorgenannten Eigenschaften aufweisen, im Allgemeinen aber aus beliebigem geeigneten Material gefertigt sein.

Ein weiterer Vorteil der Anfahr-Folie ist darin zu sehen, dass zumindest einige Walzen, an denen sie anliegt, vor etwaigen Anteilen nicht verpresster, also beispielsweise noch pulverförmiger aktiver Masse geschützt sind. Beginnt ein Eindosieren der aktiven Masse in den ersten Walzenspalt, so kann es anfangs dazu kommen, dass pulverförmige Masse insbesondere auf die direkt stromabwärts des ersten Walzenspalts befindliche Walze gelangt, und sich dort festsetzt. Ohne die Anfahr-Folie müssen diese Verunreinigungen entfernt werden.

Vor oder zu Beginn des eigentlichen Fügeverfahrens kann die Anfahr-Folie entfernt werden. Ab dem vollständigen Entfernen der Anfahr-Folie liegt die aus der aktiven Masse erzeugte Folie nicht mehr auf der Anfahr-Folie auf, sondern direkt auf den Walzen des Kalanders oder Systems, und wird dort auf die Trägerstruktur aufgebracht.

Unabhängig davon, ob eine Anfahr-Folie eingesetzt wird, kann daran gedacht sein, den Kalander so zu gestalten, dass die aus der aktiven Masse gebildete Folie zwischen dem ersten und dem zweiten Walzenspalt jeweils nur über kurze Strecken hinweg ohne Kontakt zu zumindest einer Walze verläuft. Beispielsweise kann daran gedacht sein, dass die Folie nur über Strecken hinweg ohne Kontakt zu zumindest einer Walze verläuft, welche dem zweifachen Durchmesser der kleinsten im Kalander eingesetzten Walze entsprechen. Es kann auch daran gedacht sein, diese Strecken maximal dem Durchmesser der kleinsten eingesetzten Walze entsprechen.

Die Walzenspalte können von Walzen gebildet werden, welche identische Durchmesser aufweisen. Dies gilt insbesondere für den oder die ersten Walzenspalt(e). Insbesondere die dritten Walzenspalte können auch von Walzen gebildet werden, die unterschiedliche Durchmesser aufweisen.

Die den ersten Walzenspalt bildenden Walzen können, wie bereits erwähnt, denselben Durchmesser aufweisen. Es kann an Walzen mit einem Durchmesser von beispielsweise 120 mm bis 500 mm gedacht sein, weiter an Walzen mit einem Durchmesser von 150 mm bis 400 mm, bevorzugter an Walzen mit einem Durchmesser von 200 bis 300 mm.

Dient der dritte Walzenspalt einer Nach- oder Hochverdichtung der Folie, so kann an Walzen mit Durchmessern zwischen 300 mm und 1500 mm gedacht sein. Der Durchmesser kann auch zwischen 400 mm und 1300 mm betragen.

Der zweite Walzenspalt, in welchem das Fügen, beispielsweise durch Laminieren, stattfindet, kann ebenfalls aus Walzen mit Durchmessern zwischen 200 mm und 600 mm oder zwischen 250 mm und 500 mm gebildet sein.

Insbesondere, wenn der Kalander einen dritten Walzenspalt umfasst, kann der zweite Walzenspalt auch aus Walzen gebildet werden, deren Durchmesser weniger als 500 mm beträgt.

Abweichungen von den angegebenen Abmessungen sind denkbar.

Alternative Durchmesser sind jeweils denkbar. Allgemein kann daran gedacht sein, dass der Durchmesser der Walzen, welche die Hochverdichtung bewirken, mehr als 1,25 mal so gross ist wie der Durchmesser der Walzen, welche den ersten Walzenspalt bilden. Dieses Verhältnis kann auch zumindest 1,5 oder zumindest 1,75 oder zumindest 2 oder zumindest 2,5 oder zumindest 3 oder zumindest 4 oder zumindest 5 betragen.

Die Drehachsen sämtlicher Walzen des Kalanders verlaufen vorzugsweise parallel zueinander.

Es kann daran gedacht sein, dass von denjenigen Walzen, welche Walzenspalte bilden, die während des nachfolgend näher beschriebenen Verfahrens nacheinander von der aktiven Masse bzw. der daraus gebildeten Folie durchlaufen werden, jeweils nur zwei in Laufrichtung der Folie aufeinanderfolgende Walzen in einer gemeinsamen Ebene liegen. Liegen also die Drehachsen zweier benachbarter Walzen in derselben Ebene, so liegen die Drehachsen der unmittelbar vor und nach diesen beiden Walzen angeordneten Walzen vorzugsweise nicht in derselben Ebene. Es wäre aber problemlos möglich, dass die auf zwei benachbarte Walze folgende, in Laufrichtung "übernächste" Walze abermals in derselben Ebene liegt, wie die vorgenannten zwei benachbarten Walzen.

Zusätzlich oder alternativ kann daran gedacht sein, dass eine Walze, welche unmittelbar an eine andere Walze eines stromauf- oder stromabwärts angeordneten Walzen-Paars angrenzt, zur Einstellung eines Walzenspalts nicht parallel zu Bewegungs-Richtungen dieser Walzen im Kalander bewegbar angeordnet ist. Anders ausgedrückt können etwaige vorhandene Führungen, beispielsweise in Form von Linearführungen, Hydraulik- oder PneumatikZylindern, oder dergleichen so eingerichtet sein, dass von drei aufeinanderfolgenden Walzen zumindest eine Walze zur Einstellung des entsprechenden Walzenspalts nicht parallel zur Bewegungs-Richtung der anderen beiden Walzen oder zur Bewegungs-Richtung einer der anderen beiden Walzen bewegbar ist.

Alternativen Ausführungsbeispielen gemäss kann jedoch angedacht sein, beispielsweise alle Walzen in einer Ebene anzuordnen, wobei die BewegungsAchsen, d.h. die möglichen Bewegungs-Richtungen der Walzen, zusammenfallen. Die vorstehenden Überlegungen beziehen sich nur auf bevorzugte Ausführungsbeispiele, auf welche die vorliegende Erfindung nicht eingeschränkt ist. Während die Verschiebung einer der vorgenannten in einer Ebene angeordneten Walzen dazu führen kann, dass sämtliche in Bewegungs-Richtung dieser Walze nachgeordneten Walzen Domino-Stein-artig und ungewollt mitverschoben werden, so kann dies in den oben beschriebenen bevorzugten Ausführungsbeispielen durch Anordnung und Auswahl der Drehachsen und/oder möglichen Bewegungen aufeinanderfolgender Walzen vermieden werden. Sollen die Walzenspalte möglichst unabhängig voneinander verstellbar sein, so wird jedoch meist darauf verzichtet, alle Drehachsen der Walzen in derselben Ebene anzuordnen.

Neben dem vorbeschriebenen **Kalander** umfasst die vorliegende Erfindung auch das nachstehend beschriebene **Fügeverfahren.** Merkmale und Details, welche im Hinblick auf den Kalander beschrieben wurden, gelten auch für das Verfahren, und umgekehrt.

Bei dem Fügeverfahren zur Herstellung einer folienförmigen Elektrode kommt vorzugsweise ein vorstehend beschriebener Kalander zum Einsatz.

Bei dem Fügeverfahren wird, wie nachstehend näher erläutert, zunächst aus der aktiven Masse eine Folie hergestellt, welche auch als Funktionsfilm bezeichnet werden kann. Diese Folie wird dann mit der Trägerstruktur durch Fügen verbunden. Das eigentliche Fügen erfolgt im zweiten Walzenspalt. Die Herstellung der für das Fügen benötigen Folie aus der aktiven Masse erfolgt zuvor im ersten Walzenspalt.

Die Trägerstruktur kann beispielsweise als Ableiter, teilweise auch als Kollektor bezeichnet, dienen. Die Trägerstruktur kann den Ableiter umfassen oder aus ihm bestehen.

Die Trägerstruktur kann auch als Separator, teilweise als semipermeable Membran oder lonen-Brücke bezeichnet, dienen. Die Trägerstruktur kann den Separator umfassen oder aus ihm bestehen. Eine solcher Separator kann in Batterien, und zwar sowohl in Primärbatterien als auch in Sekundärbatterien, also Akkumulatoren, zum Einsatz kommen. Er verhindert einen Kurzschluss zwischen Anode und Kathode, erlaubt aber einen Transfer von Ionen.

Die folienförmige Elektrode kann also die Trägerstruktur und eine mit ihr durch Fügen, vorzugsweise durch Laminieren verbundene Folie aus der aktiven Masse umfassen. Hierbei kann die Trägerstruktur beispielsweise als Ableiter oder als Separator dienen.

Dient die Trägerstruktur als Ableiter, und wird auf beiden Seiten der Trägerstruktur jeweils eine Folie aufgebracht, so kann diese folienförmige Elektrode als Anode oder Kathode einer Batterie eingesetzt werden.

Dient die Trägerstruktur als Separator, und wird auf beiden Seiten der Trägerstruktur jeweils eine Folie aufgebracht, so kann diese folienförmige Elektrode Anode und Kathode einer Batterie bereitstellen. Zweckmässigerweise kann in diesem Fall jeweils aussen auf die beiden Folien jeweils eine weitere als Ableiter dienende Folie, beispielsweise eine entsprechende Metallfolie, aufgebracht werden. Wird ein Elektrolyt benötigt, um einen Transfer von Ionen über den Separator hinweg zu gewährleisten, so kann dieser sich bereits in der Trägerstruktur befinden. Die Trägerstruktur kann beispielsweise mit dem Elektrolyten getränkt oder anderweitig mit dem Elektrolyten versehen sein. Hierbei kommen beispielsweise in Batterien verwendbare Elektrolyte in Betracht, welche während den Prozessbedingungen des Herstellungsverfahrens flüssig oder im Wesentlichen fest oder zumindest sehr dickflüssig sind.

Das Fügeverfahren kann als Trockenbeschichtungsverfahren durchgeführt werden. Bei einem solchen Trockenbeschichtungsverfahren enthält die aktive Masse keine Lösungsmittel. Ein solches Trockenbeschichtungsverfahren steht im Gegensatz zu bekannten nass-chemischen Slurry-Verfahren. Bei letzteren werden oftmals grosse Mengen von meist giftigen Lösungsmitteln eingesetzt, welche am Ende des Herstellungsprozesses, beispielsweise durch Trocknen, entfernt werden müssen, was meist sehr energie-intensiv ist.

Bei dem Trockenbeschichtungsverfahren kann die aktive Masse einen redox-aktiven Stoff sowie ein Bindemittel, aber kein Lösungsmittel umfassen. Die aktive Masse kann auch aus zumindest einem redox-aktiven Stoff und zumindest einem Bindemittel bestehen. Redox-aktive Stoffe sind Bestandteil praktisch jeder bekannten Batterie, sie stellen die chemische Energie bereit, welche die Batteriespannung liefert.

Bei dem Trockenbeschichtungsverfahren wird aus der lösungsmittelfreien aktiven Masse die Folie gebildet, und mit der Trägerstruktur verbunden. Die trockene aktive Masse kann hierbei im ersten Walzenspalt vorzugsweise durch die Anwesenheit des Bindemittels, welches ein Fibrillen bildendes Bindemittel sein kann, zur Folie verarbeitet werden. Die den Zusammenhalt der Folie bewirkende Fibrillierung kann beispielsweise durch Eintragen von Scherkräften im ersten Walzenspalt bewirkt werden.

Den sprachlichen Gepflogenheiten im Bereich der Herstellung folienförmiger Elektroden folgend wird vorliegend von einem "Trockenbeschichtungsverfahren" gesprochen, obwohl das Fügen, beispielsweise Laminieren, der Folie und der Trägerstruktur kein "Beschichten" im eigentlichen Sinn darstellt. Üblicherweise bezeichnet ein Beschichten nämlich das Überziehen eines flächigen Werkstücks mit einem formlosen Stoff. Dennoch wird das Aufbringen der lösungsmittelfreien Folie im Stand der Technik oft als Trockenbeschichtung bezeichnet.

Abhängig von den Prozessbedingungen und beispielsweise der Zusammensetzung und Beschaffenheit der aktiven Masse kommen zahlreiche Bindemittel in Betracht. Es kann beispielsweise an Bindemittel gedacht sein, welche einen oder mehrere der nachfolgend aufgezählten Stoffe umfassen oder daraus bestehen, wobei auch an Bindemittel gedacht sein kann, welche Co-Polymere von einem oder mehreren der nachfolgend genannten Stoffe umfassen oder daraus bestehen: Polytetrafluorethylen (PTFE); Polyvinylidenfluorid (PVDF) oder Abkömmlinge davon wie beispielsweise Poly-(vinylidenfluorid-co-hexafluorpropylen); Polyethylenglycol (PEG), teilweise auch als Polyethylenoxid (PEO) bezeichnet; Polyethylen oder Abkömmlinge davon, wie beispielsweise Ultra-high-molecular-weight polyethylene (UHMWPE); Polymethylmethacrylat (PMMA) oder Polyvinylacetat (PVA). Es kann an zahlreiche weitere Bindemittel und Bindemittelgemische gedacht sein.

Abhängig von dem redox-aktiven Stoff oder Stoffgemisch, etwaigen weiteren Komponenten der aktiven Masse und den Prozessbedingungen kann der Anteil des Bindemittels beispielsweise zwischen 0,01 und 50 Gewichts-Prozent der aktiven Masse betragen. Der Anteil an Bindemittel kann zwischen 0,01 und 25 Gewichts-Prozent, zwischen 0,01 und 15 Gewichts-Prozent, zwischen 0,01 und 10 Gewichts-Prozent, zwischen 0,01 und 5 Gewichts-Prozent oder zwischen 0,01 und 2 Gewichts-Prozent betragen.

Als Bindemittel kann im Allgemeinen ein Bindemittel eingesetzt werden, welches unter den im ersten Walzenspalt herrschenden Bedingungen Fibrillen bildet, d.h. fibrilliert.

Ausgehend von dem vorbeschriebenen Trockenbeschichtungsverfahren kann alternativ an Fügeverfahren gedacht sein, bei denen der aktiven Masse ein Lösungsmittel zugesetzt wird oder wurde. Ein solches Lösungsmittel kann einen Zusammenhalt der Folie unterstützen, eine gleichmässige Verteilung oder einen Zusammenhalt der aktiven Masse während der Verarbeitung zur Folie bewirken, und zahlreiche andere Aufgaben erfüllen. Der Anteil des Lösungsmittels in Bezug auf das Gesamtgewicht der aktiven Masse kann an die Prozessbedingungen angepasst sein. Er kann beispielsweise maximal 50 Gewichtsprozent oder maximal 25 Gewichtsprozent oder maximal 10 Gewichtsprozent oder maximal 5 Gewichtsprozent betragen. Umfasst die aktive Masse weniger als 10 Gewichtsprozent Lösungsmittel, so kann sie als "lösungsmittelarm" bezeichnet werden. Im Gegensatz zu bekannten slurry-Verfahren, die oftmals einen deutlich höheren Anteil an Lösungsmittel von beispielsweise 50 Gewichtsprozent oder mehr aufweisen, sind die Problem hinsichtlich Giftigkeit und energie-intensivem Entfernen durch Trocken oder dergleichen bei einer lösungsmittelarmen Prozessführung zwar nicht beseitigt, aber treten nur in deutlich geringerem Umfang auf.

Wird das Fügeverfahren gemäss einem Ausführungsbeispiel der vorliegenden Erfindung mit Lösungsmittel durchgeführt, so kann das Verfahren im Übrigen ablaufen, wie vorstehend bereits im Hinblick auf Trockenbeschichtungsverfahren beschrieben, mit dem einzigen Unterschied, dass ein gewisser Lösungsmittelanteil in der aktiven Masse vorhanden ist. Insbesondere wird vorzugsweise auch, wenn ein Lösungsmittel zum Einsatz kommt, die Folie zunächst im ersten Walzenspalt gebildet und im stromabwärts liegenden zweiten Walzenspalt mit der Trägerstruktur durch Fügen verbunden. Die vorliegende Erfindung umfasst vorzugsweise also nicht das Aufbringen einer ungeformt als slurry vorliegenden aktiven Masse auf die Trägerstruktur.

Kommt zumindest ein Lösungsmittel zum Einsatz, so kann daran gedacht sein, auf das Bindemittel zu verzichten. Vorzugsweise ist aber ein Bindemittel auch dann in der aktiven Masse enthalten, wenn ein Lösungsmittel zum Einsatz kommt.

Als Lösungsmittel kommen zahlreiche Stoffe in Betracht. Insbesondere kommen Stoffe in Betracht, welche die übrigen Bestandteile der aktiven Masse suspendieren können, welche verdampft oder anderweitig entfernt werden können, und welche unter den Prozessbedingungen des Fügeverfahrens nicht mit den übrigen Bestandteilen der aktiven Masse reagieren. Beispielsweise kann an organische Lösungsmittel, an anorganische Lösungsmittel, oder an wasser-basierte Lösungsmittel gedacht sein. Die Auswahl des Lösungsmittels kann von den Prozess-Bedingungen und den übrigen Bestandteilen der aktiven Masse sowie deren Beschaffenheit abhängen. Beispielsweise kann ein Lösungsmittel zumindest einen der folgenden Stoffe umfassen oder aus ihm oder ihnen bestehen: Acetonitril, Thionylchlorid, Propylencarbonat, Ethylencarbonat, Vinylencarbonat, Dimethylcarbonat, Diethylcarbonat, Ester-Verbindungen, Toluen, Aceton, etc.

Den sprachlichen Gepflogenheiten im Bereich der Herstellung folienförmiger Elektroden folgend wird in der vorliegenden Anmeldung stets von einem "Lösungsmittel" gesprochen, auch wenn der betreffende Stoff oder das betreffende Stoffgemisch die Komponenten der aktiven Masse nicht löst, sondern diese nur suspendiert. Das Lösungsmittel kann somit beispielsweise als Suspensionsmittel dienen, und beispielsweise für eine möglichst gleichmässige Verteilung und/oder Verteilbarkeit der aktiven Masse sorgen, sowie deren Verpressbarkeit zur Folie verbessern oder gewährleisten. Es kann aber auch daran gedacht sein, dass das Lösungsmittel zumindest eine der Komponenten der aktiven Masse tatsächlich auflöst, wobei diese Komponente zurückgewonnen wird, wenn das Lösungsmittel beispielsweise durch Trocken entfernt wird.

Im Allgemeinen ist im Rahmen der vorliegenden Erfindung vorgesehen, das Lösungsmittel durch Trocknen zu entfernen, falls ein Lösungsmittel zum Einsatz kommt.

Das Verfahren kann folgende Schritte umfassen:
- Positionierung der Walzen, so dass zumindest ein erster Walzenspalt und ein zweiter Walzenspalt gebildet werden
- Einbringen einer aktiven Masse über die Dosierkammer in den zumindest einen ersten Walzenspalt
- Verpressen der aktiven Masse in dem zumindest einen ersten Walzenspalt zu einer Folie
- Fügen von Folie und einer Trägerstruktur durch Aufbringen der Folie auf die Trägerstruktur in dem zweiten Walzenspalt.

Vorzugsweise werden zwei erste Walzenspalte und genau ein zweiter Walzenspalt gebildet. Auf diese Weise wird auf beide Seiten der Trägerstruktur eine Folie aufgebracht.

Sind nur genau ein erster und genau ein zweiter Walzenspalt vorhanden, so wird nur auf eine Seite der Trägerstruktur, beispielsweise auf die Oberseite, eine Folie aufgebracht. Das Aufbringen einer Folie auf die Unterseite kann dann erfolgen, indem zwei Kalander nacheinander durchlaufen werden, wobei im ersten Kalander eine Folie auf die Oberseite der Trägerstruktur aufgebracht wird, und im zweiten Kalander auf die Unterseite.

Die über die Dosierkammer in den zumindest einen ersten Walzenspalt einbringbare aktive Masse liegt vorzugsweise als Schüttgut, beispielsweise als Pulver vor.

Das Fügen im zweiten Walzenspalt erfolgt vorzugsweise durch Laminieren. Hierbei meint Laminieren im Rahmen der vorliegenden Erfindung vorzugsweise ein Verfahren zum stoffschlüssigen Fügen zumindest einer Folie und der Trägerstruktur ohne Hilfsstoffe wie Klebstoffe oder dergleichen. Es kann in allen Ausführungsvarianten daran gedacht sein, die den zweiten Walzenspalt bildenden Walzen und/oder die zu fügenden Bestandteile, d.h. insbesondere Folie und Trägerstruktur, zu erwärmen, um ein thermisches Fügen, insbesondere ein thermisches Laminieren zu bewirken.

Das Fügen im zweiten Walzenspalt muss aber nicht zwingend durch Laminieren erfolgen, es kann auch an Klebeverfahren gedacht sein. Beispielsweise kann die Folie und/oder die Trägerstruktur während des Verfahrens mit einem Klebstoff versehen werden, alternativ kann die Trägerstruktur bereits im Vorfeld mit dem Klebstoff versehen werden. Im Übrigen verläuft das Kleben im zweiten Walzenspalt von aussen betrachtet gleich dem Fügen. Der Unterschied beider Verfahrensvarianten besteht im Wirkmechanismus, da der stoffschlüssige Zusammenhalt in der folienförmigen Elektrode beim Kleben durch den Klebstoff vermittelt und ermöglicht wird.

Das Fügen kann auch dergestalt ablaufen, dass die Trägerstruktur, beispielsweise die Trägerfolie, mit einem sogenannten Primer versehen ist, welcher beispielsweise nach Beaufschlagung mit Wärme aktiviert wird, um dann für eine stoffschlüssige Verbindung zwischen der Folie und der Trägerstruktur sorgen zu können. Auch ein solches Fügen einer mit einem Primer versehenen Trägerstruktur mit zumindest einer Folie erfolgt im zweiten Walzenspalt.

Weitere im zweiten Walzenspalt stattfindende Fügeverfahren, also Alternativen zu den vorbeschriebenen Fügeverfahren Kleben und Laminieren, sind denkbar. Hierbei können beliebige Hilfsstoffe eingesetzt werden, es kann aber auch auf Hilfsstoffe verzichtet werden.

Das im Rahmen der vorliegenden Erfindung bevorzugte Laminieren bezeichnet vorzugsweise ein Aufbringen der zur Folie verpressten aktiven Masse auf die Trägerstruktur im zweiten Walzenspalt.

Die aktive Masse umfasst vorzugsweise zumindest einen redox-aktive Stoff, welcher für die Funktion der Zelle oder dergleichen, in der die folienförmige Elektrode eingesetzt werden soll, wichtig ist. Die entsprechende elektrochemische Redox-Reaktion kann beispielsweise eine von einer Batterie, in welcher die folienförmige Elektrode eingesetzt wird, bereitzustellende Spannung erzeugen. Um insbesondere durch Druck und/oder Scherkräfte im ersten Walzenspalt zur Folie verarbeitet werden zu können, kann die aktive Masse neben den redox-aktiven Stoffen auch Bindemittel enthalten.

In der aktiven Masse können beispielsweise Verbindungen (beispielsweise Oxide, Sulfide, etc.) folgender Elemente sowie Gemische dieser Elemente und/oder Verbindungen zum Einsatz kommen: Kohlenstoff (bspw. in Form von Aktivkohle, Russ oder dergleichen), Lithium, Natrium, Cobalt, Schwefel, Mangan, Vanadium, Aluminium, Magnesium, Gallium, Zink, Eisen, Nickel.

Das Verpressen der aktiven Masse zur Folie im ersten Walzenspalt kann massgeblich durch Einwirkung von Scherkräften erfolgen, welche wiederum durch Unterschiede in der Umfangsgeschwindigkeit der beiden den ersten Walzenspalt bildenden Walzen bewirkt werden. Hierbei kann beispielsweise an Verhältnisse der Umfangsgeschwindigkeiten von 1,1:1 bis 10:1 gedacht sein. Sind die Durchmesser der beiden Walzen identisch, so entsprechen die vorgenannten Verhältnisse der Umfangsgeschwindigkeiten dem Drehzahlverhältnis. Die Walze, an welche sich die im ersten Walzenspalt gebildete Folie stromabwärts anschmiegt, kann sich gemäss dem vorgenannten Verhältnis schneller drehen, als die andere den ersten Walzenspalt bildende Walze.

Die Herstellung der Folie im ersten Walzenspalt kann zwar vorzugsweise durch das Einbringen von Scherkräften erfolgen, welche vorzugsweise durch Unterschiede in den Umfangsgeschwindigkeiten der den ersten Walzenspalt bildenden Walzen bewirkt werden. Zahlreiche Alternativen sind jedoch denkbar.

Beispielsweise ist denkbar, dass sich die Walze schneller dreht, an welche sich die Folie nach dem Durchlaufen des ersten Walzenspalts nicht anschmiegt, sondern von der sie sich abwendet, um sich an die andere den ersten Walzenspalt bildendende Walze anzuschmiegen und anschliessend an die weiteren zu passierenden stromabwärts liegenden Walzen übergeben zu werden. Dies gilt jedenfalls vorzugsweise dann, wenn ein Weitertransport der im ersten Walzenspalt gebildeten Folie entlang des vorgesehenen Wegs innerhalb des Kalanders gewährleistet ist, und die mit grösserer Umfangsgeschwindigkeit sich drehende Walze die Folienführung nicht behindert oder beeinträchtigt.

Weiterhin ist denkbar, dass bereits ein Verpressen ohne vorherrschende Umfangsgeschwindigkeits-Unterschiede und somit ohne das Eintragen von Scherkräften für die Herstellung der Folie im ersten Walzenspalt sorgen kann.

Zusätzlich oder alternativ kann daran gedacht sein, dass die Herstellung der Folie aus der aktiven Masse ausschliesslich oder unter anderem durch Erwärmen erfolgt. Die den ersten Walzenspalt bildenden Walzen können beheizt sein.

Nach dem Verpressen der aktiven Masse zu der Folie und vor dem Fügen im zweiten Walzenspalt kann eine zusätzliche Kompression in zumindest einem dritten Walzenspalt erfolgen. Dieser zumindest eine optionale dritte Walzenspalt kann also einer Nach- oder Hochverdichtung der im ersten, sogenannten Filmbildner-Walzenspalt erzeugten Folie dienen.

Eine Hochverdichtungs-Einheit umfassend zumindest zwei Walzen, die ausschliesslich eine Hochverdichtung, also eine Kompression bewirken, und nicht zugleich aus der aktiven Masse die Folie herstellen oder diese anschliessend auf die Trägerstruktur aufbringen, ist optional. Der Vorteil einer separaten Hochverdichtungs-Einheit liegt beispielsweise in der Entkopplung zwischen dem Fügen, d.h. Aufbringen der Folie auf die Trägerstruktur durch beispielsweise Laminieren, und dem Hochverdichten, also der zusätzlichen Kompression der Folie, nachdem diese im ersten Walzenspalt gebildet wurde. Hochverdichtung meint hierbei zumindest eine zusätzliche Verdichtung gegenüber der im stromaufwärts angeordneten Walzenspalt erfolgten Verdichtung.

Das Verfahren kann ein beidseitiges Aufbringen jeweils einer Folie auf die Trägerstruktur umfassen, wobei das Verpressen der aktiven Masse zu jeweils einer Folie in zwei ersten Walzenspalten erfolgt, welche jeweils von einer ersten Walze und einer zweiten Walze gebildet werden, und wobei die zusätzliche Kompression in zwei dritten Walzenspalten erfolgt, welche jeweils von einer dritten Walze und einer vierten Walze gebildet werden, und wobei das Fügen in einem, vorzugsweise in genau einem zweiten Walzenspalt erfolgt, welcher von zwei fünften Walzen gebildet wird.

Bei der vorbeschriebenen Ausführungsform des Verfahrens kann die Folie vor der zusätzlichen Kompression in den dritten Walzenspalten zwischen der dritten Walze und der vierten Walze einen weiteren dritten Walzenspalt zwischen den zweiten Walzen und den dritten Walzen durchlaufen. Die Folie kann nach der zusätzlichen Kompression einen weiteren dritten Walzenspalt zwischen den vierten Walzen und den fünften Walzen durchlaufen. Bei dem vorbeschriebenen Durchlaufen der beiden weiteren dritten Walzenspalte kann die Folie übergeben und optional abermals komprimiert werden.

Gemäss einer alternativen Variante des Verfahrens kann nur eine einzige Folie auf nur eine einzige Seite der Trägerstruktur aufgebracht werden, wobei eine der Walzen, welche den ersten Walzenspalt bilden, gemeinsam mit einer weiteren Walze den zweiten Walzenspalt bilden. Hierbei kann ein Kalander eingesetzt werden, der zwei Dosierkammern und zumindest sechs Walzen umfasst, die bis zu zwei erste Walzenspalte, bis zu zwei dritte Walzenspalte und einen zweiten Walzenspalt bilden können, wobei der Kalander eingerichtet ist, die Trägerstruktur ein- oder beidseitig mit jeweils einer Folie zu verbinden, um die folienförmige Elektrode zu erhalten. Wird der vorgenannten Kalander gemäss dem ebenfalls vorgenannten Verfahren betrieben, um eine Trägerstruktur einseitig mit der erzeugten Folie zu verbinden, so werden für beide Schritte lediglich so viele Walzen dieses Kalanders eingesetzt, wie für das Verfahren unbedingt nötig sind.

Gemäss einer Variante des Fügeverfahrens können vor dem Fügen, also dem Verbinden der zumindest einen Folie mit der Trägerstruktur, folgende Schritte durchgeführt werden:
- die Trägerstruktur wird derart eingelegt, dass sie von der zugehörigen Abwickel-Rolle bis zu der zugehörigen Aufwickel-Rolle verläuft, und dazwischen den zweiten Walzenspalt passiert
- die Anfahr-Folie wird derart eingelegt, dass sie von der zugehörigen Abwickel-Rolle bis zu der zugehörigen Aufwickel-Rolle verläuft, und dazwischen den zweiten Walzenspalt passiert
- eine Folie im ersten Walzenspalt wird erzeugt und auf die Anfahr-Folie aufgebracht
- die Anfahr-Folie wird nach dem Schliessen des zweiten Walzenspalts aus den Walzenspalten entfernt.

Die Auf- und Abwickel-Rollen können Teil des Kalanders oder des Systems sein. Sind mehrere Kalander in Serie geschaltet, so kann sich die Abwickel-Rolle für die Trägerstruktur vor dem ersten Kalander befinden, wobei sich die Aufwickel-Rolle für die folienförmige Elektrode nach dem stromabwärts letzten Kalander befindet.

Das Einlegen der Trägerstruktur kann auch als "Einfädeln" bezeichnet werden. Die jeweils zugehörigen Auf- und Abwickel-Rollen sind diejenigen für die Träger-Folie, welche sich von denjenigen für die Anfahr-Folie unterscheiden. Träger- und Anfahr-Folie verwenden vorzugsweise separate Auf- und Abwickel-Rollen. In der vorliegenden Anmeldung werden sowohl die entsprechenden Auf- und Abwickel-Rollen der Träger-Folie sowie diejenigen der Anfahr-Folie gleichlautend als "Auf- und Abwickel-Rollen" bezeichnet. Aus dem jeweiligen Kontext geht hervor, welche der Auf- und Abwickel-Rollen gemeint ist.

Zwischen der Auf- und Abwickel-Rolle passiert die Trägerstruktur vorzugsweise ausschliesslich den zweiten Walzenspalt und keine anderen Walzenspalte. Falls der zweite Walzenspalt während des Einlegens der Trägerstruktur noch nicht gebildet wurde, weil die ihn bildenden Walzen noch zu weit voneinander entfernt sind, so wird die Trägerstruktur zwischen den Walzen, welche den zweiten Walzenspalt bilden können, hindurchgeführt.

Hierbei kann ein vorstehend bereits beschriebener Kalander mit Auf- und Abwickel-Rollen für die Anfahr-Folie eingesetzt werden.

Wird bei einem Fügeverfahren ein Kalander mit genau zwei ersten Walzenspalten und zwei Dosierkammern eingesetzt, wobei jedem ersten Walzenspalt zumindest jeweils eine Dosierkammer zugeordnet ist, und wobei die Trägerstruktur beidseitig mit einer Folie versehen wird, indem auf eine erste Seite der Trägerstruktur eine Folie aufgebracht wird, welche zuvor aus einer ersten aktiven Masse hergestellt wurde, und indem auf eine zweite Seite der Trägerstruktur eine Folie aufgebracht wird, welche zuvor aus einer zweiten aktiven Masse hergestellt wurde, so kann daran gedacht sein, dass die erste und die zweite aktive Masse so ausgewählt sind, dass sie sich in zumindest einer Eigenschaft unterscheiden.

Die erste und die zweite Seite könnten als Ober- und Unterseite der Trägerstruktur bezeichnet werden. Die erste und die zweite aktive Masse stammen jeweils aus der dem entsprechenden Walzenspalt zugeordneten Dosierkammer.

Der zumindest eine Unterschied zwischen den beiden aktiven Massen, aus denen die Folien gebildet werden, die auf die beiden Seiten der Trägerstruktur aufgebracht werden, kann chemischer und/oder physikalischer Natur sein. Ein Unterschied chemischer Natur kann beispielsweise in der stofflichen Zusammensetzung der aktiven Masse bestehen. Beispielsweise können Art und/oder Anteil des Bindemittels sowie Art und/oder Anteil der redox-aktiven Substanz variiert werden. Ein Unterschied physikalischer Natur kann beispielsweise in unterschiedlichen Korngrössen, einer unterschiedlichen Dichte, oder dergleichen bestehen. Es kann also im Allgemeinen daran gedacht sein, dass zwischen den beiden sich unterscheidenden aktiven Massen ein für das Fügeverfahren und/oder die herzustellende folienförmige Elektrode relevanter Unterschied besteht.

Die Trägerstruktur kann, wie bereits beschrieben, beispielsweise eine nach dem Fügen mit der Folie als Ableiter dienende Metallfolie sein. Eine derart hergestellte folienförmige Elektrode kann, insbesondere gemeinsam mit einer weiteren solchen folienförmigen Elektrode und einem beide Elektroden trennenden Separator eine elektrochemische Zelle, also beispielsweise eine Batterie, bilden oder Bestandteil einer solchen Batterie oder dergleichen sein. Eine der vorgenannten folienförmigen Elektroden bildet dann die Anode, die andere folienförmige Elektrode die Kathode.

Alternativ kann daran gedacht sein, dass die Trägerstruktur einen Separator umfasst oder aus einem Separator besteht. Umfasst die Trägerstruktur einen Separator oder besteht sie aus einem solchen, so handelt es sich zweckmässigerweise um eine als Trägerfolie ausgebildete Trägerstruktur, welche also keine makroskopischen Perforierungen, Ausnehmungen oder dergleichen aufweist. Eine solche einen Separator umfassende oder aus ihm bestehende Trägerfolie kann zweckmässigerweise lediglich die für Separatoren üblichen mikroskopischen Öffnungen umfassen, welche den Transfer der Ionen über den Separator hinweg gewährleisten, um die Funktionsfähigkeit nach Einbau in einer Batterie bereitzustellen. Wird eine solche Trägerstruktur in einem Kalander gemäss der vorliegenden Erfindung und/oder nach einem Verfahren gemäss der vorliegenden Erfindung beidseitig mit einer Folie versehen, so können in einem Schritt zwei über einen Separator isolierte folienförmige Elektroden hergestellt werden, die dann auf einfachste Weise Bestandteil einer Batterie oder dergleichen werden können. Beispielsweise kann weiterhin, entweder in einem stromabwärts nachgeschalteten Kalander oder bereits durch Zuführung von Metallfolien oder dergleichen in den zweiten Walzenspalt auf jede Folie jeweils ein Ableiter aufgebracht werden, wodurch in einem oder jedenfalls in wenigen Arbeitsschritten, und mit einem Kalander oder System gemäss der vorliegenden Erfindung eine folienförmige Struktur gebildet werden, deren über den Separator getrennte Folien unmittelbar als Anode und Kathode eingesetzt werden können.

Unter einer "folienförmigen Elektrode" wird im Rahmen der vorliegenden Erfindung also auch ein Produkt verstanden, welches, wie vorstehend beschrieben, aus einer Trägerstruktur hergestellt wurde, die einen Separator umfasst oder aus einem Separator besteht.

Einige oder sämtliche Walzen können temperierbar, d.h. beheizt oder gekühlt sein, um die prozessabhängig passenden Temperaturen für die entlang den Walzen zu führende Folie und insbesondere in den Walzenspalten bereitzustellen.

Die Temperaturen der Walzen können an den jeweiligen Prozess, also an den Kalander, die Fahrweise, die zu verarbeitende aktive Masse sowie die eingesetzte Trägerstruktur etc. angepasst sein. Es kann an Walzentemperaturen zwischen 20°C und 300°C gedacht sein, wobei die Walzen mit Hilfe einer geeigneten Regelung auf die vorgenannten Temperaturen gebracht werden können. Beispielsweise kann es Ausführungsvarianten geben, bei denen wegen starker Scherkräfte im ersten Walzenspalt eine Kühlung der den ersten Walzenspalt bildenden Walzen erforderlich ist, um eine zu starke Erwärmung der aktiven Masse durch ebendiese Scherkräfte zu vermeiden. Es kann aber auch sein, dass die aktive Masse erst bei hohen Temperaturen in der gewünschten Weise verarbeitbar ist, was eine Beheizung einiger oder sämtlicher Walzen erfordern kann. Höhere Walzentemperaturen können auch dazu dienen, etwaige vorhandenen Lösungsmittel aus der Folie zu entfernen, falls dies gewünscht ist.

Wird zumindest eine der Walzen auf Temperaturen von beispielsweise unter 30°C gekühlt, so kann daran gedacht sein, die den Kalander umgebende Luft wegen der Gefahr unerwünschter Kondenswasserbildung entsprechend zu klimatisieren und/oder zu entfeuchten.

In allen Ausführungsformen kann daran gedacht sein, die im ersten Walzenspalt erzeugte Folie vor dem Fügen im zweiten Walzenspalt zu trimmen, d.h. einen Kantenbeschnitt vorzunehmen. Der Kalander kann hierzu mit geeigneten Mitteln, beispielsweise Schabern oder messerartigen Einrichtungen oder dergleichen ausgerüstet sein, um, vorzugsweise an beiden Kanten der im ersten Walzenspalt erzeugten Folie, einen Beschnitt vorzunehmen. Somit kann eine konstante Breite der Folie sowie ein möglichst in Längsrichtung der Folie gerade verlaufender Rand der Folie bereitgestellt werden.

Ein solcher Beschnitt kann beispielsweise erfolgen, indem beidseits mit jeweils einer geeigneten Schneid-Einrichtung ein entlang der Laufrichtung der Folie verlaufender Schnitt eingeführt wird. Zusätzlich können Schaber oder dergleichen vorgesehen sein, welche die nach dem Beschnitt beidseits vorliegenden Schnittreste von den Walzen entfernen. Somit wird verhindert, dass sich diese Schnittreste beispielsweise aufwickeln oder den Betrieb anderweitig stören.

Die Breite der Folie kann in derselben Grössenordnung liegen wie die Breite der Walzen, wobei letztere parallel zur Längsrichtung ihrer Drehachsen gemessen wird. Die Breite der Folie kann im Wesentlichen der Breite der Walzen entsprechen. Es kann auch daran gedacht sein, dass die Breite der Folie gering unterhalb der Breite der Walzen liegt, beispielsweise kann beidseits ein Abstand zwischen einem Rand der Folie und einem Rand der Walzenoberfläche von etwa 10 mm gedacht sein.

Die Breite zweier einen Walzenspalt bildenden Walzen definiert gleichzeitig die Länge des betreffenden Walzenspalts. Üblicherweise ist die Breite zweier einen Walzenspalt bildenden Walzen im Wesentlichen identisch. Es kann auch daran gedacht sein, dass sämtliche Walzen eines Kalanders im Wesentlichen gleich breit sind.

Die Breiten der Walzen, und somit die Länge der Walzenspalte, können im Rahmen der vorliegenden Erfindung zwischen 200 mm und 2000 mm liegen. Es kann auch an Walzen mit einer Breite von 250 mm bis 1800 mm sowie an Walzen mit einer Breite von 300 mm bis 1500 mm gedacht sein. Weiter kann an Walzen mit einer Breite von mindestens 300 mm und höchstens 1200 mm oder höchstens 1000 mm oder höchstens 750 mm gedacht sein.

In sämtlichen Ausführungsformen kann daran gedacht sein, dass aus Gründen der Stabilität der Walzendurchmesser mit der Walzenbreite steigt. Soll eine sehr breite Walze eingesetzt werden, so hat diese im Vergleich zu schmaleren Walzen üblicherweise auch einen grösseren Durchmesser.

Die Trägerstruktur kann beispielsweise zwischen 2 und 50 Mikrometer dick sein. Vorzugsweise ist die Trägerstruktur zwischen 2 und 25 Mikrometer, noch bevorzugter zwischen 2 und 15 Mikrometer dick. Es kann ferner an Dicken zwischen 4 und 15 Mikrometer gedacht sein. Dies gilt insbesondere, wenn ein Ableiter, beispielsweise eine Metallfolie, als Trägerstruktur eingesetzt wird. Im Allgemeinen weist die Trägerstruktur eine Dicke von vorzugsweise maximal 15 Mikrometer, bevorzugter maximal 10 Mikrometer, besonders bevorzugt von maximal 6 Mikrometer und weiter bevorzugt von maximal 4 Mikrometer auf.

Die folienförmige Elektrode kann eine Dicke von maximal 100 Mikrometer, vorzugsweise von maximal 75 Mikrometer, noch bevorzugter von maximal 50 Mikrometer aufweisen.

Die im ersten Walzenspalt erzeugten Folien können Dicken zwischen 5 und 30 Mikrometer, vorzugsweise zwischen 5 und 20 Mikrometer aufweisen. Es kann auch an Foliendicken von 10 bis 20 Mikrometer gedacht sein.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 schematisch eine erste Ausführungsform eines Kalanders gemäss der vorliegenden Erfindung,
in den Figuren 2 und 3 schematisch eine zweite Ausführungsform eines Kalanders gemäss der vorliegenden Erfindung in zwei verschiedenen Betriebsweisen,
in Figur 4 schematisch eine dritte Ausführungsform eines Kalanders gemäss der vorliegenden Erfindung,
in Figur 5 schematisch eine vierte Ausführungsform eines Kalanders gemäss der vorliegenden Erfindung,
in Figur 6 einen Ausschnitt des Kalanders der Figuren 2 und 3,
in Figur 7 eine Alternative zum Kalander nach Figur 5, sowie
in den Figuren 8 bis 16 einen Kalander im Wesentlichen gemäss dem in Figur 4 gezeigten Ausführungsbeispiel umfassend zwei Kalander-Hälften 19 in verschiedenen Positionen.

Pfeile ohne Bezugsziffern, welche sich innerhalb der Walzen 4, 5, 6, 7, 8 und Rollen 16, 17 befinden, symbolisieren jeweils deren Drehsinn.

Koordinatensysteme, welche neben den Figuren dargestellt sind und eine x-sowie eine y-Achse zeigen, beziehen sich jeweils auf die nebenstehende Figur. Eine Anfahr-Folie 14, eine Trägerfolie 11 und eine aktive Masse 13 sind der besseren Unterscheidbarkeit halber durch verschiedenartig gestrichelte Linien dargestellt. Dies erlaubt eine bessere Unterscheidung der vorgenannten Elemente 11, 13, 14 voneinander und von einer Folie 10, welche durch durchgezogene Linien symbolisiert ist, und soll keine Aussage auf die Struktur oder den Aufbau der vorgenannten Elemente 11, 13, 14 treffen. Lediglich die aktive Masse 13 korreliert dahingehend mit der gestrichelten Linie, als sie zwischen einer Dosierkammer 9 und einem ersten Walzenspalt 1 üblicherweise als Schüttgut, d.h. in Partikel-Form, vorliegt.

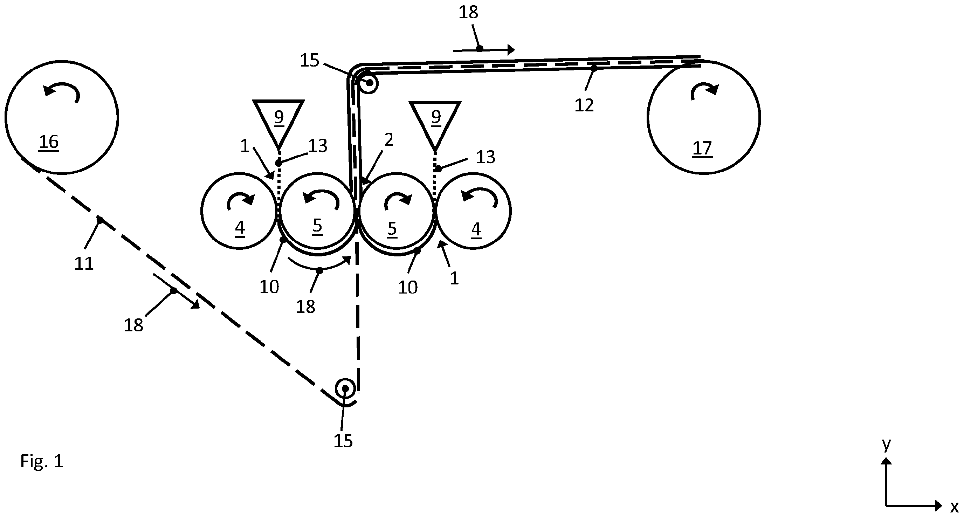

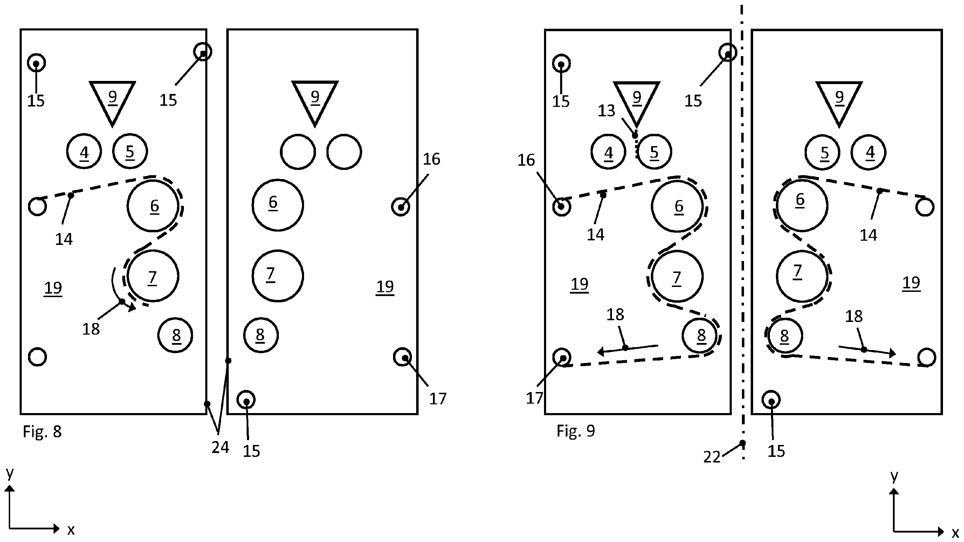

Die Darstellungen der Kalander gemäss den Figuren 1 bis 7 sind insofern schematisch, als im Wesentlichen nur die Walzen 4, 5, 6, 7, 8 und einige weitere Komponenten, aber beispielsweise keine Kalander-Gehäuse dargestellt sind, welche in den Figuren 8 ff. für beide Kalander-Hälften 19 zumindest angedeutet sind.

### Ausführungsbeispiel

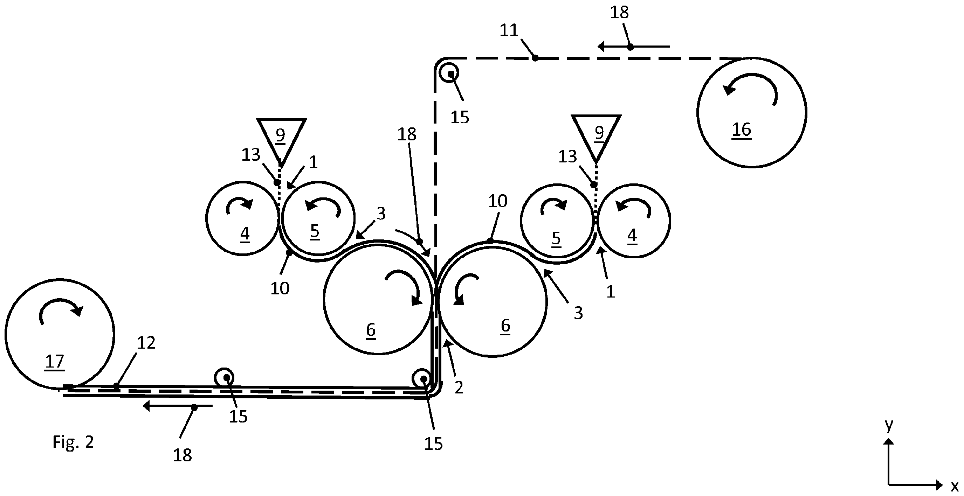

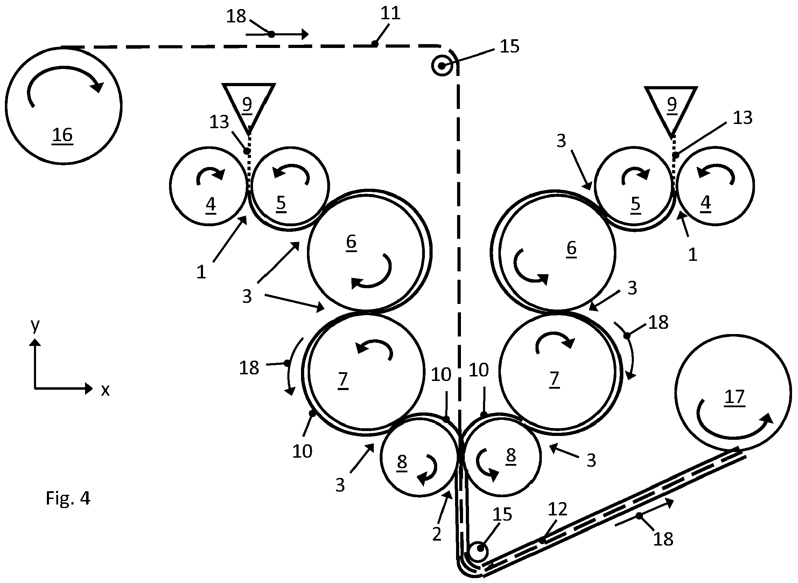

Die den ersten Walzenspalt 1 bildenden Walzen 4, 5 haben in allen Figuren 1 bis 7 denselben Durchmesser. Die Walzen 6, 7 in den Figuren 2, 3, 4 und 6 haben ebenfalls denselben Durchmesser, welcher grösser ist, als derjenige der Walzen 4, 5. Die Walzen 8 in der Variante nach Figur 4 haben wiederum denselben Durchmesser, welcher in etwa dem Durchmesser der Walzen 4, 5 entspricht.

In Figur 1 sind erste Walzen 4 und zweite Walzen 5 einer ersten Ausführungsform eines Kalanders dargestellt. Ferner sind Dosierkammern 9, eine Folie 10, eine Trägerfolie 11, eine folienförmige Elektrode 12, Laufrichtungen 18, zwei erste Walzenspalte 1 und ein zweiter Walzenspalt 2, eine Abwickel-Rolle 16, eine Aufwickel-Rolle 17 sowie Umlenkrollen 15 dargestellt.

In der Variante des Kalanders nach Figur 2 sind zusätzlich zwei dritte Walzenspalte 3 sowie zwei dritte Walzen 6 erkennbar.

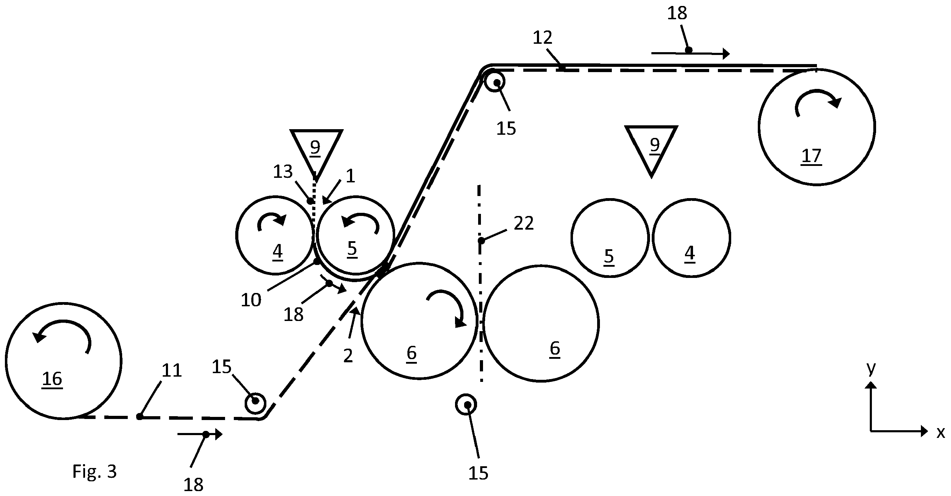

Die Anordnung nach Figur 3 unterscheidet sich von derjenigen nach Figur 2 lediglich durch die Folienführung der Trägerfolie 11 und eine Laufrichtung 18 der Trägerfolien 11 durch die zweiten Walzenspalte 2.

Die folienförmige Elektrode 12, welche im zweiten Walzenspalt 2 entsteht, setzt sich jeweils aus der Trägerfolie 11 und der Folie 10 zusammen, welche im zweiten Walzenspalt 2 durch Laminieren verbunden werden. Dies ist in den Figuren dahingehend angedeutet, dass innerhalb der folienförmigen Elektrode 12 die schichtförmig aufeinanderliegenden Folien 10 und Trägerfolien 11 noch erkennbar sind.

Die Figuren 2 und 3 zeigen einen Kalander mit zwei Dosierkammern 9, der genau sechs Walzen 4, 5, 6 umfasst, welche bis zu zwei erste Walzenspalte 1, bis zu zwei dritte Walzenspalte 3 und einen zweiten Walzenspalt 2 bilden können.

In Figur 4 sind zusätzlich zwei vierte Walzen 7 und zwei fünfte Walzen 8 erkennbar. Die dritten und vierten Walzen 6, 7 weisen signifikant grössere Durchmesser auf als die übrigen Walzen 4, 5, 8. Die Durchmesser der ersten und zweiten Walzen 4, 5 sind zueinander identisch, ebenso die Durchmesser der dritten und vierten Walzen 6, 7 zueinander und die Durchmesser beider fünfter Walzen 8 zueinander.

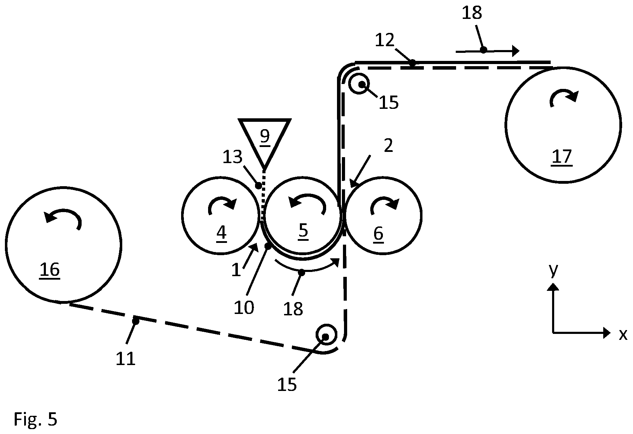

Die Figur 4 zeigt einen Kalander mit zwei Dosierkammern 9, der genau zehn Walzen 4, 5, 6, 7, 8 umfasst, die bis zu zwei ersten Walzenspalte 1, bis zu sechs dritte Walzenspalte 3, und einen zweiten Walzenspalt 2 bilden können. Im Vergleich zu den Anordnungen gemäss den Figuren 1 bis 4 umfasst die Anordnung nach Figur 5 keine vertikale, d.h. parallel zur y-Achse verlaufende Symmetrie-Achse 22 durch den zweiten Walzenspalt 2.

Diese Symmetrie-Achse 22 ist nicht in allen Figuren 1 bis 4, sondern nur in Figur 3 andeutungsweise dargestellt. Obwohl in den Figuren 1, 2 und 4 nicht gesondert eingezeichnet, so ist doch unmittelbar ersichtlich, dass die Walzen 4, 5, 6, 7, 8 der vorgenannten Figuren im Wesentlichen symmetrisch zu einer (gedachten) Symmetrie-Achse 22 angeordnet sind, welche parallel zur y-Achse und durch den zweiten Walzenspalt 2 verläuft.

Ebenfalls im Gegensatz zu den Kalandern gemäss den Figuren 1 bis 4 kann der Kalander gemäss Figur 5 die Träger-Folie 11 nicht beidseitig mit der Folie 10 versehen. (Der in Figur 3 gezeigte Kalander entspricht demjenigen nach Figur 2, wird aber anders betrieben. Ein beidseitiges Aufbringen einer Folie 10 wäre, wie in Figur 2 ersichtlich, durch eine geänderte Folienführung und Laufrichtung 18 ausgehend von Figur 3 möglich.)

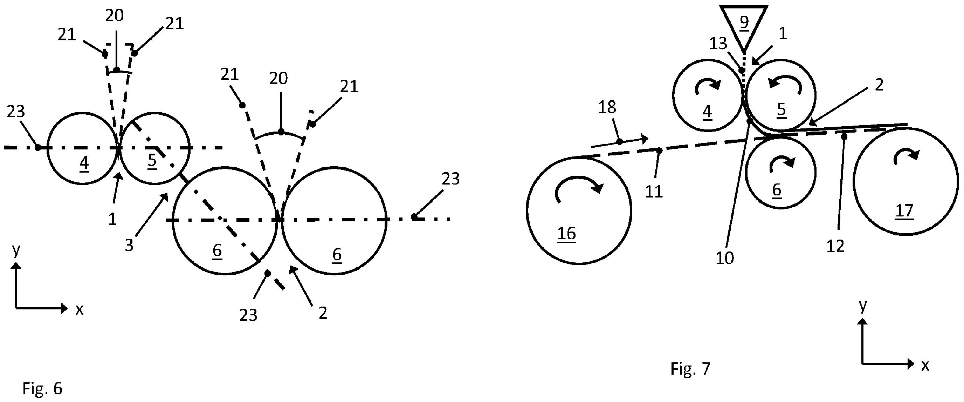

In Figur 6 ist ein Ausschnitt des Kalanders der Figuren 2 und 3 dargestellt, wobei durch den ersten und den zweiten Walzenspalt 1, 2 verlaufende Tangenten 21 an die Walzen 4, 5, 6 sowie Winkel 20 zwischen diesen Tangenten dargestellt sind.

In Figur 7 ist eine Alternative zu dem drei Walzen 4, 5, 6 umfassenden Kalander nach Figur 5 gezeigt. Da die dritte Walze 6 direkt unterhalb der zweiten Walze 5 angeordnet ist, kann dieser Kalander einfacher und kompakter gebaut sein. Weiterhin wird im Betrieb die Folie 10 nur auf einem Viertel des Umfangs der zweiten Walze 5 ohne Abstützung oder Auflage durch die Trägerfolie 11 geführt. Ferner kann in dieser Variante auf Umlenkrollen 15 verzichtet werden.

Im Gegensatz zur Anordnung gemäss den Figuren 2 und 4 umfassen die Anordnungen gemäss den Figuren 1, 3 und 5 keine gesonderten Walzen 6, 8, wie die dritten Walzen 6 in Figur 2 und die fünften Walzen 8 in Figur 4, welche vorrangig oder ausschliesslich für das Laminieren zuständig sind.

Die Figuren 1 bis 7 zeigen jeweils einen Querschnitt der dargestellten Kalander. Die Walzen-Achsen (nicht dargestellt) und die Walzenspalte 1, 2, 3 (nur angedeutet) verlaufen entlang der (nicht gezeigten) z-Achse, d.h. orthogonal zur Zeichenebene. Dies gilt auch für die Kalander gemäss den Figuren 8 bis 16.

In den Figuren 8 bis 16 ist ein aus zwei Kalander-Hälften 19 bestehender Kalander gezeigt, welcher hinsichtlich der Anordnung seiner Walzen 4, 5, 6, 7, 8 aufgebaut ist, wie derjenige nach Figur 4. Hierbei sind u.a. zueinander zeigende Abschnitte 24 der Kalander-Hälften 19 zu erkennen. Weiterhin umfassen die Kalander-Hälften 19 jeweils eine Auf- und Abwickel-Rolle 16, 17 für eine Anfahr-Folie 14. Die Auf- und Abwickel-Rollen 16, 17 für die Trägerfolie 11 bzw. die folienförmige Elektrode 12, welche in den Figuren 1 bis 7 dargestellt sind, wurden in den Figuren 8 ff. der Übersicht halber nicht gezeigt.

### Bezugnehmend auf die Figuren 1 bis 16 erklärt sich die Funktionsweise der erfindungsgemässen Vorrichtung folgendermassen:

Bei besonders bevorzugten Ausführungsbeispielen der vorliegenden Erfindung gemäss den Figuren 2 und 4 wird die Trägerfolie 11 beidseitig mit den Folien 10 versehen, welche zuvor in den ersten Walzenspalten 1 gebildet wurden. Die ersten Walzen 4 und die zweiten Walzen 5 weisen unterschiedliche Umfangsgeschwindigkeiten auf, um aus der als Schüttgut in den Dosierkammern 9 vorliegenden aktiven Masse 13 durch Einbringen von Scherkräften die Folie 10 herzustellen. Vorzugsweise beträgt ein Drehzahlverhältnis zwischen den zweiten Walzen 5 und den ersten Walzen 4 zwischen 1,1:1 und 10:1. Dieses Verhältnis entspricht dem Verhältnis der Umfangsgeschwindigkeiten der Walzen 4, 5, da deren Durchmesser identisch sind. Aus der aktiven Masse 13, welche aus den Dosierkammern 9 in die ersten Walzenspalte 1 eingebracht wird, werden durch die so erzeugten Scherkräfte die Folien 10 gebildet.

In den Varianten der Figuren 2 und 4 passiert die Folie 10 zunächst zumindest einen dritten Walzenspalt 3, in dem eine Übergabe der Folie 10 und optional eine weitere Kompression stattfindet. Anschliessend wird die Folie 10 im zweiten Walzenspalt 2 auf die Trägerfolie 11 laminiert.

In der Variante gemäss Figur 4 kann in den dritten Walzenspalten 3 zwischen der zweiten Walze 5 und der dritten Walze 6 sowie zwischen der vierten Walze 7 und der fünften Walze 8 vorrangig eine Übergabe der Folie 10 und optional eine gewisse Kompression stattfinden. In dem dritten Walzenspalt 3 zwischen der dritten Walze 6 und der vierten Walze 7 kann eine Hochverdichtung der Folie 10, also eine weitere Kompression stattfinden. Da diese Hochverdichtung hohe Linienlasten entlang der (nicht gezeigten) z-Achse erfordert, welche wiederum eine Durchbiegung der Walzen 6, 7 bewirken können, sind die Durchmesser der Walzen 6, 7 grösser gewählt als die Durchmesser der Walzen 4, 5, 8. Eine Durchbiegung der Walzen 6, 7 meint hierbei, dass ihre Längsachsen nicht parallel zur (nicht gezeigten und orthogonal zur Zeichenebene verlaufenden) z-Achse verlaufen, sondern beispielsweise eine innerhalb der y-z-Ebene verlaufende Kurve beschreiben. Walzen 6, 7 mit grösserem Durchmesser neigen zu geringerer Durchbiegung. Die Walzen 4, 5 benötigen hingegen keinen derart grossen Durchmesser, da sie vorrangig Scherkräfte erzeugen, und die im ersten Walzenspalt 1 herrschenden Linienlasten üblicherweise geringer sind.

Ähnliche Überlegungen gelten für die Variante nach Figur 2. Dort wirken die grossen Linienlasten hingegen zwischen den beiden dritten Walzen 6 im zweiten Walzenspalt 2, wo zeitgleich hochverdichtet und laminiert werden kann.

Wird die Trägerfolie 11 beidseitig mit jeweils einer Folie 10 versehen, so können diese Folien 10 aus derselben aktiven Masse 13 oder aus verschiedenen aktiven Massen 13 hergestellt werden. Werden verschiedene aktive Massen 13 verwendet, so können sich diese in zumindest einer Eigenschaft unterscheiden, wobei dieser zumindest eine Unterschied chemischer und/oder physikalischer Natur sein kann. Insbesondere wenn die Trägerfolie 11 einen Stromfluss von einer Seite zur anderen Seite ermöglicht, also von der Oberseite der Trägerfolie 11 zur ihrer Unterseite, so wird im Falle des beidseitigen Aufbringens von jeweils einer Folie 10 auf die Trägerfolie 11 die so erzeugte folienförmige Elektrode 12 üblicherweise entweder als Anode oder als Kathode eingesetzt. Ist ein solcher Stromfluss hingegen unterbunden, indem die Trägerfolie 11 beispielsweise einen Separator umfasst oder aus einem solchen Separator besteht, so dass Ober- und Unterseite bis auf einen erlaubten lonen-Transfer über den Separator hinweg elektrisch isoliert sind, so kann eine der Folien 10, welche beispielsweise auf die Oberseite der Trägerfolie 11 laminiert wird, als Anode dienen, während diejenige Folie 10, welche auf die Unterseite der Trägerfolie 11 laminiert wird, als Kathode wirkt.

Auch in Figur 1 erfolgt ein zweiseitiges, d.h. beidseitiges Aufbringen, die vorstehenden Überlegungen zur Beschaffenheit der beiden Folien 10, welche auf die Trägerfolie 11 aufgebracht werden, gelten analog auch für die Ausführungsform gemäss Figur 1.

In den Ausführungsbeispielen gemäss den Figuren 3, 5 und 7 erfolgt ein einseitiges Aufbringen der Trägerfolie 11 mit der zuvor im ersten Walzenspalt 1 hergestellten Folie 10. Hierbei werden also nur die Ober- oder Unterseite der Trägerfolie 11 mit der Folie 10 verbunden. Im Übrigen verläuft das in den Figuren 3, 5 und 7 dargestellte Verfahren analog des bereits beschriebenen zweiseitigen Aufbringens der Folie 10.

Aus den Figuren 2 und 6 gehen die Vorteile hervor, welche sich bei der Verwendung von Walzen 4, 5, 6 mit unterschiedlichen Durchmessern ergeben. Dies gilt sowohl für die Figur 2, die in Figur 6 ausschnittsweise dargestellt ist, als auch für die Figur 4, die ebenfalls Walzen 4, 5, 6, 7, 8, mit unterschiedlichem Durchmesser aufweist.

In Figur 6 sind für beide gezeigten Walzenspalte 1, 2 Tangenten 21 an diejenigen Walzen 4, 5, 6 dargestellt, welche den jeweiligen Walzenspalt 1, 2 bilden. Auch ein Winkel 20 zwischen diesen Tangenten 21 ist dargestellt. Aus Figur 6 geht unmittelbar hervor, dass der Winkel 20 proportional zum Durchmesser der den betreffenden Walzenspalt 1, 2 bildenden Walzen 4, 5, 6 zunimmt.

Grundsätzlich kann es vorteilhaft sein, nur dort Walzen 6 mit grossem Durchmesser einzusetzen, wo hohe Linienlasten entlang des in z-Richtung verlaufenden Walzenspalts 2 nötig sind. Dies ist beispielsweise bei den Walzen 6 der Figuren 2 und 6 sowie zwischen den Walzen 6, 7 in Figur 4 der Fall. Die letztgenannten Walzen dienen der Hochverdichtung der Folie 10.

Demgegenüber können die Walzen 4, 5 der Figuren 2, 4 und 6 und auch die Walzen 8 der Figur 4 kleinere Durchmesser aufweisen. Insbesondere in den Walzenspalten 1 und auch im Walzenspalt 2 der Figur 4 sind keine so hohen Linienlasten nötig, so dass auf Walzen mit grossem Durchmesser verzichtet werden kann. Dies ist hinsichtlich Betriebs-, Beschaffungs- und Baukosten des Kalanders vorteilhaft.

Insbesondere im ersten Walzenspalt 1 wirken vorzugsweise Scherkräfte. Das Einbringen von Scherkräften ist effektiver, wenn der Winkel 20 möglichst klein ist. In diesem Fall wirken die Scherkräfte nicht nur unmittelbar innerhalb des ersten Walzenspalts 1, sondern bereits in einem in y-Richtung darüber befindlichen Abschnitt zwischen den Walzen 4 und 5, in welchem deren Oberflächen sich noch relativ nahekommen. Je grösser der Walzendurchmesser desto grösser die in x-Richtung gemessene Entfernung der Walzenoberflächen bei gleichem Abstand vom Walzenspalt 1, 2 in y-Richtung.

Sowohl für das einseitige Aufbringen gemäss den Figuren 3, 5 und 7 als auch für das beidseitige Aufbringen gemäss den Figuren 1, 2 und 4 gilt: Die Trägerfolie 11 wird jeweils von der Abwickel-Rolle 16 abgewickelt, nötigenfalls an Umlenkrollen 15 umgelenkt, und passiert dann den zweiten Walzenspalt 2. Anschliessend wird die im zweiten Walzenspalt 2 gebildete folienförmige Elektrode 12 auf der Aufwickel-Rolle 17 aufgewickelt. Die Laufrichtung 18 der Folie 10, der folienförmigen Elektrode 12 und der Trägerfolie 11 ist jeweils angedeutet.

In Bezug auf die Figuren 2, 4 und 6 sei erwähnt, dass diejenigen Walzen 4, 5, 6, 7, 8, welche die Walzenspalte 1, 2, 3 bilden, die von der Folie 10 in Laufrichtung 18 nacheinander durchlaufen werden, vorzugsweise wie folgt angeordnet sind: Die Mittelpunkte von jeweils genau zwei der Walzen 4, 5, 6, 7, 8, die einen Walzenspalt 1, 2, 3 bilden, liegen im Querschnitt zwangsweise auf einer Linie 23, welche auch durch den jeweiligen Walzenspalt 1, 2, 3 geht. Dies geht aus Figur 6 hervor. Wie in Figur 2 zu sehen ist, werden die Walzenspalte der Figuren 2 und 6 in der Reihenfolge 1 --> 3 --> 2 von der Folie 10 durchlaufen, wobei diese Walzenspalte 1, 3, 2 von den Walzenpaaren [4;5], [5;6] und [6;6] gebildet werden. Die Linien 23 durch die (nicht gezeigten) Mittelpunkte der vorgenannten Walzenpaare fallen nicht zusammen, sie verlaufen also entweder parallel oder in einem Winkel zueinander, was auf Figur 6 deutlich hervorgeht.

Fallen die Linien 23 nicht zusammen, so kann meist auf einfache Weise eine Verstellung eines Walzenspalts 1, 2, 3 auch durch Bewegung entlang dieser Linien 23 erfolgen, ohne dass benachbarte Walzen 4, 5, 6, 7, 8 zwangsweise "dominostein-artig" verschoben werden, was wiederum deren Walzenspalte 1, 2, 3 zwangsweise verändern würde. Es kann hierbei genügen, wenn die Linien 23, welche durch die Walzen 4, 5, 6, 7, 8 zweier direkt benachbarter Walzenspalte 1, 2, 3 geht, nicht zusammenfallen.

Eine in den Figuren 8 bis 16 dargestellte Sequenz zeigt insbesondere die Verwendung der Anfahr-Folie 14 zu Beginn des Füge-Verfahrens. Der Übersicht halber sind in den Figuren 8 bis 16 mehrfach vorkommende Details nicht in allen Figuren mit entsprechenden Bezugsziffern versehen.

In den Figuren 8 bis 16 ist jeweils links dieselbe linke Kalander-Hälfte 19 und rechts dieselbe rechte Kalander-Hälfte 19 dargestellt. Die Unterschiede zwischen den Figuren 8 bis 16 liegen beispielsweise in einer Anordnung, einem Verlauf, und/oder einer Position der Trägerfolie 11, der Anfahr-Folie 14, der Walzen 4, 5, 6, 7, 8 oder einer Position der Kalander-Hälften 19 selbst in Bezug auf die x-Richtung.

Wie nachstehend noch ausführlicher beschrieben, zeigen die Figuren 8 bis 16 eine Variante eines Fügeverfahrens, bei der vor dem Aufbringen der Folien 10 auf die Trägerfolie 11 folgende Schritte durchgeführt werden:
- die Trägerfolie 11 wird derart eingelegt, dass sie von der zugehörigen Abwickel-Rolle (nicht dargestellt) bis zu der zugehörigen Aufwickel-Rolle (nicht dargestellt) verläuft, und dazwischen den zweiten Walzenspalt 2 passiert
- die Anfahr-Folie 14 wird derart eingelegt, dass sie von der zugehörigen Abwickel-Rolle 16 bis zu der zugehörigen Aufwickel-Rolle 17 verläuft, und dazwischen die zwischen den Walzen 5, 6, 7, 8 bestehenden Walzenspalte 3, 2 in Laufrichtung 18, und insbesondere den zweiten Walzenspalt 2 passiert
- in den ersten Walzenspalten 1 werden die Folien 10 erzeugt und auf die Anfahr-Folie 14 aufgelegt, und somit aufgebracht
- die Anfahr-Folie 14 wird nach dem Schliessen des zweiten Walzenspalts 2 aus den Walzenspalten 2, 3 entfernt.

In Figur 8 sind die Kalander-Hälften 19 in x-Richtung betrachtet voneinander entfernt, die zueinander zeigenden Abschnitte 24 berühren einander nicht. Die Anfahr-Folie 14 wird von der Abwickel-Rolle 16 abgewickelt und zwischen den Walzen 5, 6, 7, 8 entlang ihrer Laufrichtung 18 eingefädelt. Dies ist in Figur 8 lediglich für die links dargestellte Kalander-Hälfte 19 gezeigt, erfolgt aber natürliche ebenso für die rechts dargestellte Kalander-Hälfte 19.

Der finale Zustand im Hinblick auf die Anfahr-Folie 14 beider Kalander-Hälften 19 ist in Figur 9 gezeigt. Dort ist auch zu sehen, dass nach dem Einfädeln der Anfahr-Folie 14 die aktive Masse 13 aus der Dosierkammer 9 in den zwischen der ersten Walze 4 und der zweiten Walze 5 bestehenden Zwischenraum eingebracht wird. Kurz bevor oder nachdem die aktive Masse 13 derart dosiert wird, wird der erste Walzenspalt 1 erzeugt, indem die erste Walze 4 in x-Richtung auf die zweite Walze 5 zu bewegt wird. Der vorgenannte Zwischenraum wird durch diese Bewegung in x-Richtung zum ersten Walzenspalt 1.

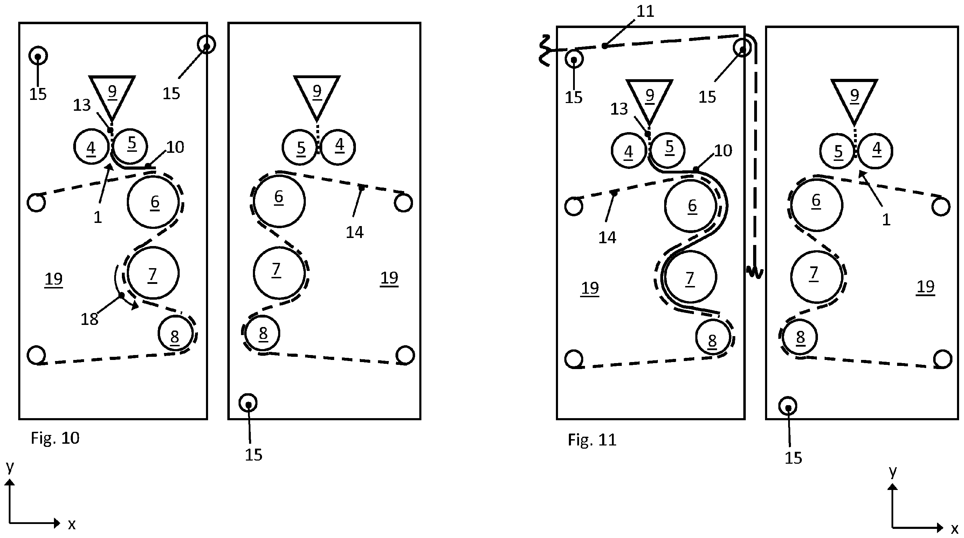

Auf die im Hinblick auf die vorangehenden Figuren 1 bis 7 bereits beschriebene Weise wird, wie in Figur 10 ersichtlich, aus der aktiven Masse 13 die Folie 10 erzeugt. Diese legt sich auf die Anfahr-Folie 14 auf. Die Laufrichtung 18 von Anfahr-Folie 14 und Folie 10 ist hierbei identisch, vorzugsweise ist auch eine Laufgeschwindigkeit beider Folien 14, 10 in Laufrichtung 18 identisch. Die Anfahr-Folie 14 transportiert die Folie 10 somit in der Art eines Mitnehmers zwischen den Walzen 5, 6, 7, 8 hindurch.

Wie in Figur 11 ersichtlich, wird die Trägerfolie 11 mittels der Umlenk-Rollen 15 in Position gebracht für den späteren Start des eigentlichen Fügeverfahrens, bei welchem diese Trägerfolie 11 beidseitig mit den Folien 10 verbunden werden soll. Die Trägerfolie 11 kommt in den Figuren 8 ff. von links, üblicherweise von einer (der Übersicht halber nicht dargestellten) Abwickel-Rolle 16. Nach rechts ist ausserhalb der rechts dargestellten Kalander-Hälfte 19 die Aufwickel-Rolle 17 (nicht dargestellt) vorgesehen, welche zunächst die Trägerfolie 11 und nach dem Start des Fügeverfahrens die folienförmige Elektrode 12 aufwickelt.

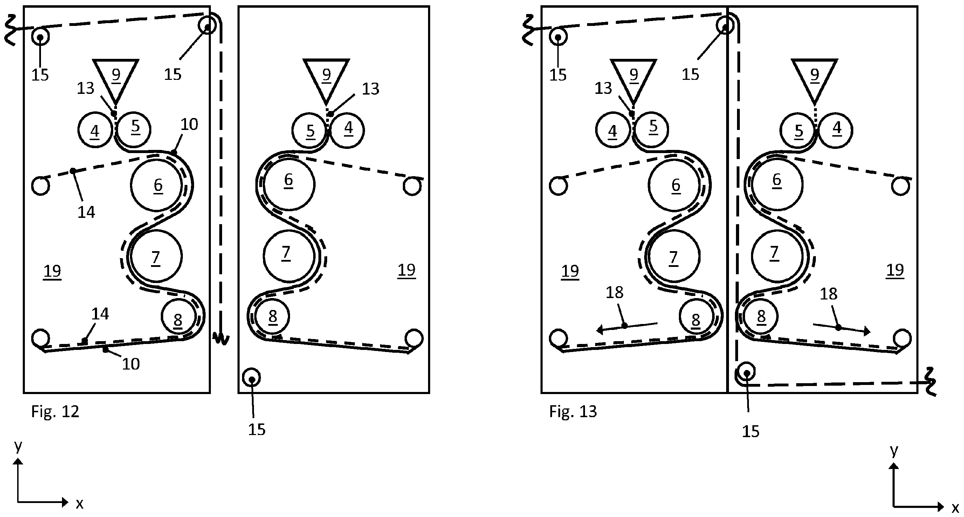

Nach Durchlaufen der in den Figuren 11 und 12 gezeigten Schritte werden die Kalander-Hälften 19 geschlossen. Dies erfolgt, wie in Figur 13 ersichtlich, durch Bewegung zumindest einer der Kalander-Hälften 19 in x-Richtung auf die benachbarte Kalander-Hälfte 19 zu.

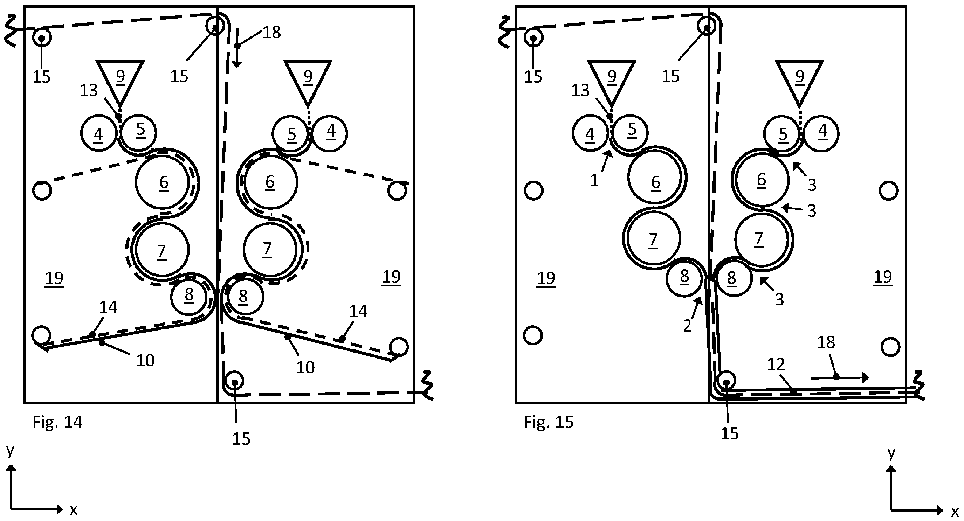

Einem Vergleich der Figuren 13 und 14 ist zu entnehmen, dass die Walzen 6, 7, 8 bewegt werden, um die Walzenspalte 2, 3 zu bilden. Die dritte Walze 6 und die vierte Walze 7 werden linear in y-Richtung, in den Figuren also nach oben, bewegt. Die fünfte Walze 8 wird ebenfalls linear, aber schräg in Richtung nach oben und auf den Abschnitt 24 zu bewegt.

Dem Vergleich der Figuren 13 und 14 ist beispielsweise auch zu entnehmen, dass die Walze 8, welche unmittelbar an das stromaufwärts (d.h. entgegen der Laufrichtung 18 nächstfolgend) gelegene Walzen-Paar 6, 7 angrenzt, zur Einstellung des zweiten Walzenspalts 2 nicht parallel zur Bewegungs-Richtung dieser Walzen 6, 7 im Kalander bewegbar angeordnet ist. Die Walzen 6, 7 sind nämlich parallel zur y-Achse bewegbar, während die Walze 8 schräg zur y-Achse bewegbar ist. Dasselbe gilt für die Walze 6 im Hinblick auf das stromaufwärts angeordnete Walzen-Paar 4, 5, von dem nur die Walze 4 in x-Richtung bewegbar ist. Die Walze 6 ist, wie bereits erwähnt, nicht in x-Richtung, sondern in y-Richtung bewegbar, um den dritten Walzenspalte 3 zwischen den Walzen 5, 6 zu bilden. Auf diese Weise wird vermieden, dass bei Einstellung eines der Walzenspalte 1, 2, 3 unerwünschterweise vorangehende oder nachfolgende Walzenspalte 1, 2, 3 ebenfalls verstellt werden.

Figur 14 zeigt eine Situation, in welcher mit Hilfe der Anfahr-Folien 14 die Kalander-Hälften 19 so vorbereitet wurden, dass der eigentliche Füge-Vorgang gemäss Figur 15 beginnen kann. Hierfür müssen allerdings die Anfahr-Folien 14 entfernt werden. Weiterhin muss dafür gesorgt werden, dass die Folien 10, welche in der Situation nach Figur 14 noch auf den Anfahr-Folien 14 aufliegen oder an diesen haften, auf die Trägerfolie 11 laminiert werden. Dies kann, abhängig von Beschaffenheiten der Anfahr-Folie 14, der Trägerfolie 11 und der Folie 10, insbesondere von deren Affinitäten, Haft-Eigenschaften etc. zueinander, auf verschiedene Weise erfolgen. Beispielsweise könnten die Anfahr-Folie 14 und die Folie 10 kurz unterhalb der fünften Walzen 8, d.h. in negativer y-Richtung von den Walzen 8 entfernt, durchschnitten werden. Es kann auch daran gedacht sein, beispielsweise kurz oberhalb des zweiten Walzenspalts 2 zwischen den fünften Walzen 8 die Folie 10 entlang der (nicht gezeigten) z-Richtung zu durchschneiden, ohne die Anfahr-Folie 14 zu durchschneiden. Wandert dieser Schnitt in Laufrichtung 18 in den zweiten Walzenspalt 2, so wird die Folie 10 ab dieser Stelle nicht mehr an der Anfahr-Folie 14 haften, sondern auf die Trägerfolie 11 auflaminiert. Zahlreiche Alternative für das Entfernen der Anfahr-Folie 14 sind denkbar.

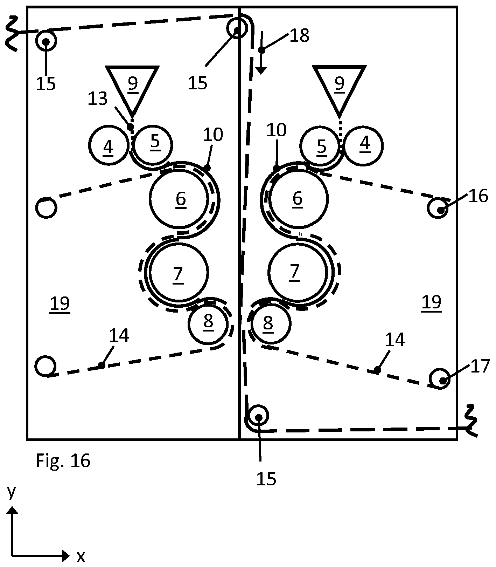

Der Übergang zum Fügeverfahren gemäss Figur 15 kann auch von einer in Figur 16 gezeigten Situation ausgehen. In Figur 16 ist eine Alternative zur Situation nach Figur 14 gezeigt. In der Situation nach Figur 16 wurde die Folie 10 nicht durch den zweiten Walzenspalt 2 zwischen den fünften Walzen 8 hindurchgeführt, sondern endet kurz oberhalb dieses (in Figur 16 noch nicht gebildeten) zweiten Walzenspalts 2. Wird nun ausgehend von Figur 16 der zweite Walzenspalt 2 gebildet, indem die Folien 10 in den Zwischenraum zwischen den fünften Walzen 8 in Laufrichtung 18 hineinfahren, und gegebenenfalls, indem die fünften Walzen 8 zusätzlich einander noch weiter angenähert werden, als dies in Figur 16 gezeigt ist, so werden die Folien 10 im zweiten Walzenspalt 2 sozusagen von den Anfahr-Folien 14 an die Trägerfolie 11 übergeben. Die Anfahr-Folie 14 kann dann von den Abwickel-Rollen 16 abgetrennt werden, und vollständig auf die Aufwickel-Rollen 17 aufgewickelt werden, da sie nicht mehr benötigt wird. Anschliessend wird das Fügeverfahren gemäss Figur 15 durchgeführt.

Eine in x-Richtung wirkende Kraft im zweiten Walzenspalt 2, d.h. eine Linienlast zwischen den Walzen 8, kann hierbei sowohl durch zumindest einen (nicht dargestellten) Hydraulik- oder Pneumatik-Zylinder oder dergleichen der fünften Walze 8 bereitgestellt werden, und zusätzlich oder alternativ auch durch einen Druck, mit welchem die Kalander-Hälften 19 in x-Richtung aufeinander zu bewegt und in der geschlossenen Position gemäss den Figuren 13 bis 15 gehalten werden.

Insbesondere die letztgenannten Vorteile zur Erzeugung des Drucks im zweiten Walzenspalt 2 ergeben sich unmittelbar aus der im Wesentlichen symmetrischen Gestaltung der Kalander-Hälften 19. Diese Symmetrie betrifft vorrangig die symmetrische Anordnung der Walzen 4, 5, 6, 7, 8, und ganz besonders die symmetrische Anordnung der Walzen 8. Die Anordnung etwaiger Umlenk-Rollen 15 oder anderer Bestandteile der Kalander-Hälften 19 ist von untergeordneter Bedeutung. Die Symmetrie-Achse 22 ist in Figur 9 angedeutet. Diese Symmetrie der Walzen 4, 5, 6, 7, 8 zu dieser Symmetrie-Achse 22 ermöglicht die Aufteilung des Kalanders in zwei Kalander-Hälften 19.

Werden die Schritte der Figuren 8 bis 15, insbesondere das in x-Richtung erfolgende Auseinanderfahren der Kalander-Hälften 19 sowie das Öffnen der Walzenspalte 1, 2, 3, welche ab Figur 14 in geschlossener Form vorliegen, rückwärts durchlaufen, so ermöglicht dies ein einfaches Reinigen und/oder Warten des Kalanders.

Den Figuren 1 bis 16 ist jeweils zu entnehmen, dass die nach dem zweiten Walzenspalt 2 vorliegende folienförmige Elektrode 12 mehrschichtig aufgebaut ist, und jeweils die Trägerfolie 11 und zumindest auf einer Seite eine Folie 10 umfasst.

Obwohl nur einige bevorzugte Ausführungsbeispiele der Erfindung beschrieben und dargestellt wurden, ist es offensichtlich, dass der Fachmann zahlreiche Modifikationen hinzufügen kann, ohne Wesen und Umfang der Erfindung zu verlassen. Insbesondere sind folgende **Modifikationen** denkbar:

Um mit einem Kalander gemäss den Figuren 2 und 3 eine Trägerfolie 11 nur einseitig mit einer Folie 10 zu versehen, müssen Folienführung und Laufrichtung 18 nicht zwingend so gewählt werden, wie in Figur 3 gezeigt. Stattdessen kann die Trägerfolie 11 auch so geführt werden wie in Figur 2 gezeigt, wobei lediglich aus einer einzigen Dosierkammer 9 eine aktive Masse 13 zur Folie 10 verarbeitet wird. Dies kann zu Vereinfachungen im Betrieb führen, weil der Ablauf für ein- und beidseitiges Aufbringen der Folie 10 auf die Trägerfolie 11 weitgehend identisch ist, und bspw. die Folienführung, d.h. der Verlauf der Trägerfolie 11 und der folienförmigen Elektrode 12 und der Folien 10 durch die Walzenspalte 1, 2, 3 im Vergleich zum beidseitigen Aufbringen nicht geändert werden muss. Allerdings besteht nur in der Fahrweise gemäss Figur 3 der Vorteil, dass nur genau so viele Walzen 4, 5, 6 verwendet werden, wie unbedingt nötig.

Die Walzen 4, 5 des in Figur 1 dargestellten Kalanders können denselben Durchmesser haben. Zur Erzeugung der im ersten Walzenspalt 1 benötigten Scherkräfte drehen sich die zweiten Walzen 5 vorzugsweise mit einer anderen Umfangsgeschwindigkeit als die ersten Walzen 4. Zwischen den zweiten Walzen 5 und den ersten Walzen 4 kann beispielsweise ein Drehzahlverhältnis zwischen 1,1:1 und 10:1 vorliegen, wenn diese Walzen 4, 5 denselben Durchmesser haben.

Alternativ kann daran gedacht sein, dass die Durchmesser der zweiten Walzen 5 anders gewählt werden, als die Durchmesser der ersten Walzen 4. Je nach Durchmesser-Verhältnis der Walzen 4, 5 können in solchen Ausführungsformen auch dann Scherkräfte erzeugt werden, wenn die Walzen 4, 5 sich gleich schnell drehen, das Drehzahl-Verhältnis also 1:1 ist. Schliesslich kommt es für das Eintragen der Scherkräfte nicht auf die Drehzahlen, sondern auf die Umfangsgeschwindigkeiten an.

Analoge Überlegungen gelten für sämtliche Walzen 4, 5 in den Figuren 1 bis 15, welche den ersten Walzenspalt 1 bilden. Bevorzugt sind all diese Walzen 4, 5 jedoch gleich gross und drehen sich mit unterschiedlicher Umfangsgeschwindigkeit und somit unterschiedlicher Drehzahl.

Die - vorzugsweise identischen - Durchmesser der ersten und zweiten Walze 4, 5 können zwischen 120 mm und 500 mm betragen. Es kann an Durchmesser zwischen 150 mm und 400 mm, vorzugsweise zwischen 200 mm und 300 mm gedacht sein.

Die - vorzugsweise identischen - Durchmesser der dritten und vierten Walze 6, 7 in Figur 4 können zwischen 300 mm und 1500 mm oder zwischen 400 mm und 1300 mm betragen. Diese Walzen können höhere Linienlasten ohne Durchbiegung bereitstellen, und somit eine Hochverdichtung der Folie 10 bewirken.

Die - vorzugsweise identischen - Durchmesser der fünften Walze 8 in Figur 4 können zwischen 200 mm und 600 mm oder zwischen 250 mm und 500 mm betragen.

In den Figuren 1 bis 7 wurden die jeweils dargestellten Kalander nur sehr schematisch und vorrangig anhand der Walzen 4, 5, 6, 7, 8 dargestellt. Weitere Einzelheiten und Details der Kalander wurden der besseren Übersichtlichkeit halber absichtlich ausgelassen.

Soll mit Kalandern gemäss beispielsweise den Figuren 5 und 7, welche eine Trägerfolie 11 einseitig mit einer Folie 10 versehen, oder mit einem Kalander, der gemäss Figur 3 betrieben wird, eine Trägerfolie 11 beidseitig mit der Folie 10 versehen werden, so kann daran gedacht sein, zwei der vorgenannten Kalander hintereinander, d.h. in Reihe zu schalten. Im ersten Kalander kann beispielsweise die Oberseite der Trägerfolie 11 mit der Folie 10 versehen werden und im stromabwärts (d.h. in Laufrichtung 18 nachfolgend) gelegenen zweiten Kalander die Unterseite der Trägerfolie 11. Ausgehend von den Figuren 3, 5 und 7 kann also anstelle der Aufwickel-Rolle 17 ein zweiter Kalander auf den zweiten Walzenspalt 2 folgen, in welchem die noch nicht mit einer Folie 10 versehene Seite der Trägerfolie 11 mit einer Folie 10 versehen wird. Auch ein solches System umfassend zwei Kalander ist von der vorliegenden Erfindung umfasst.

Umfasst die Trägerfolie 11 einen Separator oder besteht sie aus einem solchen Separator, und wird diese Trägerfolie 11 beidseitig mit der Folie 10 versehen, so kann es sinnvoll sein, in einem nachgeschalteten Kalander jeweils eine als Ableiter fungierende beispielsweise Metallfolie auf die Folien 10 aufzubringen. Auch ein solches System umfassend zwei Kalander ist von der vorliegenden Erfindung umfasst.

Im Hinblick auf die Figuren 1, 2 und 4 sowie 8 ff. kann, wenn die Trägerfolie 11 einen Separator umfasst oder aus einem solche besteht, auch in einen geeigneten dritten Walzenspalt 3 eine als Ableiter dienende Metallfolie oder dergleichen so eingebracht werden, dass diese in der folienförmigen Elektrode 12 die jeweils äusserste Schicht, also deren Ober- und Unterseite bildet. Diese als Ableiter zusätzlich eingebrachten Metallfolien können beispielsweise im zweiten Walzenspalt 2 durch Laminieren mit den Folien 10 verbunden werden, was in derselben Weise geschehen kann, wie für die Verbindung von Folie 10 und Trägerfolie 11 bereits erläutert wurde.

Mit Verweis auf die Figuren 5 und 7 sei angemerkt, dass Variationen der räumlichen Anordnung der Walzen 4, 5, 6, 7, 8 sämtlicher Kalander möglich sind. Derartige Variationen sind nicht auf den Kalander mit drei Walzen 4, 5, 6 der Figur 5 beschränkt.

Eine Symmetrie in Bezug auf die Symmetrie-Achse 22 ist zwar in mancher Hinsicht vorteilhaft, aber nicht zwingend. Dies gilt nicht nur für die Ausführungsformen der Figuren 5 und 7, sondern auch für diejenigen der Figuren 1, 2 und 4, welche so modifiziert werden können, dass keine Symmetrie mehr vorliegt. Im Hinblick auf die in den Figuren 8 bis 16 dargestellte Sequenz kann es genügen, wenn die den zweiten Walzenspalt 2 bildenden Walzen 8 zur Symmetrie-Achse 22 symmetrisch in den Kalander-Hälften 19 angeordnet sind.

Die Auf- und Abwickel-Rollen 16, 17 der Trägerfolie 11 können in sämtlichen gezeigten Varianten ausserhalb des oder der Kalander angeordnet sein. Die Auf- und Abwickel-Rollen 16, 17 können jedoch mit dem oder den Kalander(n) ein System bilden.

Im Hinblick auf die Figuren 8 bis 16 sei erwähnt, dass die Anfahr-Folie 14 anders geführt sein kann. Allerdings verläuft die Anfahr-Folie 14 in der Regel stets zumindest durch den zweiten Walzenspalt 2 und vorzugsweise niemals durch den ersten Walzenspalt 1. Für die Anfahr-Folie 14 können Umlenk-Rollen 15 vorhanden sein.

Aus den Figuren 8 bis 16 geht hervor, dass der erste Walzenspalt 1 durch Bewegung der ersten Walzen 4 in x-Richtung, d.h. durch Verschiebung der Drehachsen dieser ersten Walzen 4 in x-Richtung, unabhängig von den anderen Walzenspalten 2, 3 einstellbar ist. Eine Verstellung des ersten Walzenspalts 1 beeinflusst die anderen Walzenspalte 2, 3 auch nicht. Unabhängig von der konkreten Anordnung und Anzahl der Walzen 4, 5, 6, 7, 8 kann diese Bauart vorzugsweise stets gewählt werden, um den ersten Walzenspalt 1 bedarfsabhängig einzustellen. Ähnliches gilt für den zweiten Walzenspalt 2, welcher beispielsweise durch Bewegung der Kalander-Hälften oder einer der Kalander-Hälften 19 in x-Richtung eingestellt werden kann. Diese Einstellung durch Bewegung der Kalander-Hälften 19 kann auch bei Kalandern verwirklicht sein, die anders gebaut sind, als der Kalander gemäss den Figuren 8 ff. Ähnliches gilt auch für den vorzugsweise zur Hochverdichtung benutzten dritten Walzenspalt 3 zwischen der dritten und der vierten Walze 6, 7, welcher durch Bewegung der vorgenannten Walzen 6, 7 in y-Richtung und somit unabhängig und ohne Rückwirkung auf die Walzenspalte 1, 2 eingestellt werden kann.

Im Hinblick auf die Sequenz, welche in den Figuren 8 bis 16 gezeigt ist, sei nochmals auf die Bedeutung des Begriffs "Walzenspalt" eingegangen:
Die Walzen-Paare 4, 5 sowie 5, 6 sowie 6, 7 sowie 7, 8 sowie 8, 8 können theoretisch einen Walzenspalt 1, 2, 3 bilden. Die Walze 4, welche in x-Richtung beweglich ist, kann jedoch beispielsweise mit der Walze 7, welche in y-Richtung beweglich ist, keinen Walzenspalt bilden, weil die zweite Walze 5 und die dritte Walze 6 im Weg stehen.

Ohne dass die Kalander-Hälften 19 in x-Richtung einander angenähert werden, können auch die Walzen 8 keinen zweiten Walzenspalt 2 bilden. Diese sind nämlich, wenn die Kalander-Hälften 19 geöffnet sind, üblicherweise zumindest mehrere Dezimeter oder sogar noch weiter voneinander entfernt. Ein Zwischenraum zwischen zwei derart voneinander entfernten Walzen, selbst wenn "Sichtkontakt" besteht, ist kein Walzenspalt.

Von einem Walzenspalt wird vorzugsweise gesprochen, wenn folgende Kriterien erfüllt sind: Erstens verlaufen die Walzenachsen parallel, was bei sämtlichen Walzen 4, 5, 6, 7, 8 aller Figuren der Fall ist. Zweitens liegen die Walzenachsen auf einer gemeinsamen Ebene, innerhalb der auch der Walzenspalt verläuft. Diesbezüglich sei auf Figur 6 verwiesen. Drittens liegt ein Walzenspalt erst dann vor, wenn die (Walzen-)Spalt-bildenden Walzen eine Kraftwirkung auf eine zwischen ihnen verlaufende Folie oder dergleichen ausüben oder ausüben könnten. Dies ist bei einem Abstand von mehreren Dezi- oder Zentimetern üblicherweise nicht der Fall, weil Folien üblicherweise nicht mehrere Dezimeter oder Zentimeter dick sind. Erst im Millimeter-Bereich, vorzugsweise jedoch im Mikro-Meter-Bereich kann von einem Walzenspalt gesprochen werden. Folienförmige Elektroden welche gemäss einem der erfindungsgemässen Verfahren und/oder auf einem der erfindungsgemässen Kalander hergestellt wurden, können geringe Dicken von beispielsweise 50 Mikrometern oder weniger aufweisen. Es können aber auch folienförmige Elektroden mit einer Dicke von mehreren Hundert Mikrometern hergestellt werden.

Die vorstehend erläuterte Definition ist im Rahmen der vorliegenden Erfindung zwar bevorzugt, aber nicht zwingend. Es kann auch daran gedacht sein, das Vorhandensein eines Walzenspalts von weiteren Gegebenheiten, beispielsweise dem Vorhandensein eines folienförmigen Körpers im Walzenspalt abhängig zu machen.

Obwohl die Schritte "Filmbildung", d.h. "Folien-Bildung" im ersten Walzenspalt 1, Hochverdichtung im zweiten oder dritten Walzenspalt 2, 3 und Laminieren im zweiten Walzenspalt 2 in allen Figuren in demselben Kalander ablaufen, kann daran gedacht sein, mehrere Kalander in Reihe zu schalten, wobei jeder Kalander nur eine der vorgenannten Funktionen übernimmt. Hier kann auch absichtlich beispielsweise eine mehr-schrittiges Hochverdichten, ggf. auch unter bewusstem Einsatz einer gewissen Redundanz, erfolgen.

Auf die Hochverdichtung, im Allgemeinen auf jegliche Art zusätzlicher Kompression, kann verzichtet werden. Vorzugsweise sind nur die Folien-Bildung im ersten Walzenspalt 1 und das Laminieren im zweiten Walzenspalt 2 obligatorisch.

Welche der Walzen 4, 5, 6, 7, 8 und Rollen 16, 17 aktiv angetrieben sind, und welche sich nur passiv drehen, kann für jeden Kalander gemäss den jeweiligen Anforderungen ausgewählt werden. Vorzugsweise sind die sich mit verschiedenen Umfangsgeschwindigkeiten drehenden ersten und zweiten Walzen 4, 5 aktiv angetrieben. Es kann weiterhin angedacht sein, zusätzliche Abzugswalzen für die Trägerfolie 11 bereitzustellen, welche einen Walzenspalt bilden, den die Trägerfolie 11 durchläuft. Diese Abzugswalzen können für den Vorschub der Trägerfolie 11 in Laufrichtung 18 sorgen. Zusätzlich oder alternativ können solche Abzugswalzen für die folienförmige Elektrode 12 vorgesehen sein. Jeder Kalander kann ein oder mehrere Abzugswalzen-Paare umfassen.

Im Hinblick auf die Figuren 8 bis 16 kann auch vorgesehen sein, dass die fünften Walzen 8 nicht nur linear entlang eines im Vorhinein durch die Bauart der Kalander-Hälften 19 festgelegten Wegs bewegbar sind, sondern dass ein Winkel einer linear und schräg (d.h. weder parallel zur y- noch zur x-Achse) verlaufenden Bewegung der fünften Walzen 8 zur x- und y-Achse durch Anordnung entsprechender Führungen oder dergleichen veränderlich ist. Die schräg verlaufende lineare Bewegung der fünften Walzen 8 geht aus einem Vergleich ihrer Positionen in den Figuren 13 und 14 unmittelbar hervor. Diese Bewegung der fünften Walzen 8 innerhalb des Kalanders dient - wie bei allen beweglichen Walzen in allen Ausführungsbeispielen - üblicherweise nicht nur zum Bereitstellen des Walzenspalts, sondern auch zum Bereitstellen und Anpassen der im Walzenspalt herrschenden Kräfte. Deshalb kann durch Veränderung des vorgenannten Winkels, d.h. einer räumlichen Lage einer gedachten Geraden, entlang welcher die lineare Bewegung der betreffenden Walze erfolgt, auch die in x- und y-Richtung wirkenden Kraft-Komponenten beeinflusst werden. Je kleiner der Winkel zwischen der gedachten Geraden, entlang welcher sich die fünften Walzen 8 in den Figuren 8 ff. zur Bereitstellung des zweiten Walzenspalts 2 bewegen können, und der x-Achse, desto grösser die in x-Richtung - d.h. im zweiten Walzenspalt 2 - wirkende Kraft, welche die fünften Walzen 8 übertragen können. Je grösser der vorgenannte Winkel, desto grösser die Kraftkomponente, welche die fünften Walzen 8 in y-Richtung auf die vierten Walzen 7 übertragen können. Diese Überlegung gilt für sämtliche Walzen in allen gezeigten Ausführungsbeispielen.

Eine Anordnung der Auf- und Abwickel-Rollen 16, 17 hinsichtlich der y-Richtung kann variiert werden. Dasselbe gilt für den Abstand der beiden Rollen 16, 17 vom zweiten Walzenspalt 2. Insgesamt kann also daran gedacht sein, eine Lage bzw. Position der Auf- und Abwickel-Rollen 16, 17 an die örtlichen Gegebenheiten anzupassen.

Insbesondere, wenn die Trägerfolie 11 als Ableiter dienen soll, kann sie durch eine flachbandförmige Trägerstruktur ersetzt werden, welche beispielsweise Ausnehmungen oder Perforierungen aufweisen kann.

Die in den Figuren gezeigten Kalander können jeweils Teil eines Systems aus mehreren Kalandern sein, wobei sich an Stelle der Aufwickel-Rollen 17 der Figuren 1 bis 7 jeweils zumindest ein weiterer Kalander anschliessen kann.

Im zweiten Walzenspalt 2 kann statt eines Laminierens auch ein Kleben erfolgen, es kann also auf geeignete Weise ein Klebstoff bereitgestellt, auf die Trägerfolie 11 oder die Folie 10 aufgebracht oder in den zweiten Walzenspalt 2 eingebracht werden.

Umfangsgeschwindigkeiten der dritten, vierten und fünften Walzen 6, 7, 8 sind, soweit vorhanden, vorzugsweise identisch mit der Umfangsgeschwindigkeit der zweiten Walze 5.

Es kann daran gedacht sein, dass die erste Walze 4 eine höhere Umfangsgeschwindigkeit aufweist als die zweite Walze 5, sofern die in den Figuren gezeigte Folienführung nicht beeinträchtigt wird. Insbesondere ist ein solches Verhältnis der Umfangsgeschwindigkeiten vor allem dann denkbar, wenn die Walze 4 nicht dafür sorgt, dass die frisch gebildete Folie 10 unmittelbar stromabwärts des ersten Walzenspalts 1 den Kontakt zur zweiten Walze 5 verliert und frei in der Luft hängt, was eine Beschädigung der Folie 10 bewirken kann.

Es kann auch daran gedacht sein, die Folie 10 im ersten Walzenspalt 1 anders als durch Scherkräfte zu bilden. Die den ersten Walzenspalt 1 bildenden Walzen 4, 5 können sich auch mit derselben Umfangsgeschwindigkeit drehen, und die Folie 10 beispielsweise durch Druck herstellen, wenn die Beschaffenheit und die Eigenschaften der aktiven Masse 13 dies erlauben.

Ferner kann beispielsweise in der Ausführungsform nach Figur 4 daran gedacht sein, dass zwar die jeweils zueinander korrespondierenden Walzen mit derselben Umfangsgeschwindigkeit drehen, also beispielsweise die beiden fünften Walzen 8 und gegebenenfalls auch die beiden vierten Walzen 7 usw. Weiterhin kann jedoch angedacht sein, dass die fünften Walzen 8 schneller drehen als die vierten Walzen 7, welche wiederum schneller drehen können als die dritten Walzen 6 usw. Im Allgemeinen kann daran gedacht sein, dass die stromabwärts liegenden Walzen jeweils schneller drehen, als die unmittelbar vorangehende stromaufwärts liegende Walze. Dies kann ein Strecken der im ersten Walzenspalt 1 gebildeten Folie 10 bewirken.

Sämtliche Walzen 4, 5, 6, 7, 8 der Figuren 1 bis 16 können in geeigneter Weise temperiert sein.

### Bezugszeichenliste

| | |
|---|---|
| 1 | Erster Walzenspalt |
| 2 | Zweiter Walzenspalt |
| 3 | Dritter Walzenspalt |
| 4 | Erste Walze |
| 5 | Zweite Walze |
| 6 | Dritte Walze |
| 7 | Vierte Walze |
| 8 | Fünfte Walze |
| 9 | Dosierkammer |
| 10 | Folie |
| 11 | Trägerfolie |
| 12 | Folienförmige Elektrode |
| 13 | Aktive Masse |
| 14 | Anfahr-Folie |
| 15 | Umlenkrolle |
| 16 | Abwickel-Rolle |
| 17 | Aufwickel-Rolle |
| 18 | Laufrichtung |
| 19 | Kalander-Hälfte |
| 20 | Winkel |
| 21 | Tangente |
| 22 | Symmetrie-Achse |
| 23 | Linie |
| 24 | Zueinander zeigende Abschnitte der Kalander-Hälften |
| 25 | |
| 26 | |
| 27 | |
| 28 | |
| 29 | |
| 30 | |
| 31 | |
| 32 | |
| 33 | |

## Patentansprüche

1. Kalander zur Herstellung einer folienförmigen Elektrode (12),
der Kalander umfassend zumindest drei Walzen (4, 5, 6, 7, 8),
wobei die zumindest drei Walzen (4, 5, 6, 7, 8) innerhalb des Kalanders derart angeordnet sind, dass zumindest zwei Walzenspalte (1, 2, 3) gebildet werden können,
wobei zumindest einem ersten Walzenspalt (1) eine Dosierkammer (9) derart zugeordnet ist, dass eine als Schüttgut vorliegende aktive Masse (13) über die Dosierkammer (9) in diesen ersten Walzenspalt (1) eingebracht werden kann, um dort in die Form einer Folie (10) verpresst zu werden,
wobei ein zweiter Walzenspalt (2) eingerichtet ist, zumindest eine in zumindest einem ersten Walzenspalt (1) gebildete Folie (10) mit einer flachbandförmigen Trägerstruktur (11) durch Fügen zu verbinden, um eine folienförmige Elektrode (12) zu erhalten.

2. Kalander nach Anspruch 1, **gekennzeichnet durch** genau zwei erste Walzenspalte (1), denen jeweils eine Dosierkammer (9) zugeordnet ist.

3. Kalander nach einem der vorhergehenden Ansprüche, **dadurch gekennzeichnet, dass** der Kalander zwei zueinander bewegliche Abschnitte (19), welche vorzugsweise horizontal zueinander beweglich sind, umfasst, wobei jedem Abschnitt (19) zumindest zwei jeweils den ersten Walzenspalt (1) bildende Walzen (4, 5) zugeordnet sind.

4. Kalander nach einem der vorhergehenden Ansprüche, **gekennzeichnet durch** einen dritten Walzenspalt (3), welcher entweder eine zusätzliche Kompression der Folie (10) vor dem Fügen bewirkt, oder einer Übergabe der Folie (10) dient.

5. Kalander nach zumindest einem der vorhergehenden Ansprüche, **dadurch gekennzeichnet, dass** der Kalander zwei Dosierkammern (9) und zumindest sechs Walzen (4, 5, 8) umfasst, die bis zu zwei erste Walzenspalte (1), bis zu zwei dritte Walzenspalte (3) und einen zweiten Walzenspalt (2) bilden können, wobei der Kalander eingerichtet ist, die flachbandförmige Trägerstruktur (11) ein- oder beidseitig mit der Folie (10) zu versehen, um die folienförmige Elektrode (12) zu erhalten.

6. Kalander nach zumindest einem der vorhergehenden Ansprüche, **dadurch gekennzeichnet, dass** der Kalander zwei Dosierkammern (9) und zumindest zehn Walzen (4, 5, 6, 7, 8) umfasst, die bis zu zwei erste Walzenspalte (1), bis zu sechs dritte Walzenspalte (3) und einen zweiten Walzenspalt (2) bilden können, wobei der Kalander eingerichtet ist, die flachbandförmige Trägerstruktur (11) ein- oder beidseitig mit der Folie (10) zu versehen, um die folienförmige Elektrode (12) zu erhalten.

7. Kalander nach zumindest einem der vorhergehenden Ansprüche, **gekennzeichnet durch** eine Abwickel-Rolle (16) und eine Aufwickel-Rolle (17) für eine Anfahr-Folie (14), wobei die Ab- und Aufwickel-Rollen (16, 17) für die Anfahr-Folie (14) so angeordnet sind, dass die Anfahr-Folie (14) durch den zweiten Walzenspalt (2) verläuft, um dort vor einem Beginn eines eigentlichen Fügeverfahrens einen von dem ersten Walzenspalt (1) zu dem zweiten Walzenspalt (2) verlaufenden Abschnitt der Folie (10) bereitzustellen.

8. System umfassend zumindest einen Kalander nach zumindest einem der vorhergehenden Ansprüche, **gekennzeichnet durch** eine Abwickel-Rolle (16) für die flachbandförmige Trägerstruktur (11) und eine Aufwickel-Rolle (17) für die folienförmige Elektrode (12).

9. Fügeverfahren zur Herstellung einer folienförmigen Elektrode (12) unter Verwendung eines Kalanders nach einem der Ansprüche 1 bis 7 oder eines Systems nach Anspruch 8, das Verfahren umfassend folgende Schritte:
- Positionierung der Walzen (4, 5, 6, 7, 8), so dass zumindest ein erster Walzenspalt (1) und ein zweiter Walzenspalt (2) gebildet werden,
- Einbringen einer aktiven Masse (13) über die Dosierkammer (9) in den zumindest einen ersten Walzenspalt (1) und
- Verpressen der aktiven Masse (13) in dem ersten Walzenspalt (1) zu einer Folie (10)
- Fügen der Folie (10) und einer flachbandförmigen Trägerstruktur (11) durch Aufbringen der Folie (10) auf die flachbandförmige Trägerstruktur (11) in dem zweiten Walzenspalt (2).

10. Fügeverfahren nach Anspruch 9, vorzugsweise Trockenbeschichtungs-Verfahren, wobei nach dem Verpressen der aktiven Masse (13) zu der Folie (10) und vor dem Fügen eine zusätzliche Kompression in einem dritten Walzenspalt (3) erfolgt.

11. Fügeverfahren, vorzugsweise Trockenbeschichtungs-Verfahren, nach Anspruch 10 zum Aufbringen zweier Folien (10) auf jeweils eine Seite der flachbandförmigen Trägerstruktur (11), wobei das Verpressen der aktiven Masse (13) zu jeweils einer Folie (10) in zwei ersten Walzenspalten (1) erfolgt, welche jeweils von einer ersten Walze (4) und einer zweiten Walze (5) gebildet werden, und wobei die zusätzliche Kompression in zwei dritten Walzenspalten (3) erfolgt, welche jeweils von einer dritten Walze (6) und einer vierten Walze (7) gebildet werden, und wobei das Fügen in einem zweiten Walzenspalt (2) erfolgt, welcher von zwei fünften Walzen (8) gebildet wird.

12. Fügeverfahren, vorzugsweise Trockenbeschichtungs-Verfahren, nach einem der Ansprüche 9 bis 11 unter Verwendung eines Kalanders nach Anspruch 5, wobei die flachbandförmige Trägerstruktur (11) einseitig mit der Folie (10) versehen wird, und wobei eine der Walzen (5), welche den ersten Walzenspalt (1) bilden, gemeinsam mit einer weiteren Walze (8) den zweiten Walzenspalt (2) bilden.

13. Fügeverfahren, vorzugsweise Trockenbeschichtungs-Verfahren, nach einem der Ansprüche 9 bis 12 unter Verwendung eines Systems nach Anspruch 8, wobei vor dem Fügen folgende Schritte durchgeführt werden:
- die flachbandförmige Trägerstruktur (11) wird derart eingelegt, dass sie von der zugehörigen Abwickel-Rolle (16) bis zu der zugehörigen Aufwickel-Rolle (17) verläuft, und dazwischen den zweiten Walzenspalt (2) passiert
- die Anfahr-Folie (14) wird derart eingelegt, dass sie von der zugehörigen Abwickel-Rolle (16) bis zu der zugehörigen Aufwickel-Rolle (17) verläuft, und dazwischen den zweiten Walzenspalt (2) passiert
- eine Folie (10) im ersten Walzenspalt (1) erzeugt und auf die Anfahr-Folie (14) aufgebracht wird
- die Anfahr-Folie (14) nach dem Schliessen des zweiten Walzenspalts (2) aus den Walzenspalten entfernt wird.

14. Fügeverfahren, vorzugsweise Trockenbeschichtungs-Verfahren, nach einem der Ansprüche 9 bis 13 unter Verwendung eines Kalanders mit genau zwei ersten Walzenspalten (1) und zwei Dosierkammern (9), wobei jedem ersten Walzenspalt zumindest jeweils eine Dosierkammer (9) zugeordnet ist, **dadurch gekennzeichnet, dass** die flachbandförmige Trägerstruktur (11) beidseitig mit einer Folie (10) versehen wird, indem auf eine erste Seite der flachbandförmigen Trägerstruktur eine Folie (10) aufgebracht wird, welche zuvor aus einer ersten aktiven Masse (13) hergestellt wurde, und indem auf eine zweite Seite der flachbandförmigen Trägerstruktur eine Folie (10) aufgebracht wird, welche zuvor aus einer zweiten aktiven Masse (13) hergestellt wurde, wobei sich die erste und die zweite aktive Masse in zumindest einer Eigenschaft unterscheiden.

15. Fügeverfahren, vorzugsweise Trockenbeschichtungs-Verfahren, nach Anspruch 14, **dadurch gekennzeichnet, dass** die flachbandförmige Trägerstruktur eine Trägerfolie (11) ist, die einen Separator umfasst oder aus einem Separator besteht.
